# FASCICULE DE BREVET EUROPEEN

(11) **EP 3 109 105 B1**
(45) Date de publication et mention de la délivrance du brevet: **13.11.2019**
(21) Numéro de dépôt: 16176200.0
(22) Date de dépôt: 24.06.2016
(51) Int. Cl.: B60S 1/40

(54) **ADAPTATEUR POUR UN ESSUIE-GLACE DE VÉHICULE AUTOMOBILE ET ENSEMBLE COMPORTANT UN TEL ADAPTATEUR**
ADAPTER FÜR EINEN SCHEIBENWISCHER EINES KRAFTFAHRZEUGS, UND EINHEIT, DIE EINEN SOLCHEN ADAPTER UMFASST
ADAPTER FOR A MOTOR VEHICLE WINDSCREEN WIPER AND ASSEMBLY HAVING SUCH AN ADAPTER

(30) Priorité: 26.06.2015 FR 1555909
(43) Date de publication de la demande: 28.12.2016
(73) Titulaire: Valeo Systèmes d'Essuyage, 78322 Le Mesnil Saint Denis (FR)
(72) Inventeur: ALIBERTI, Claude, 63370 LEMPDES (FR); MOULEYRE, Guillaume, 63122 Saint Genès Champanelle (FR); GAUCHER, Vincent, 63720 ENNEZAT (FR)
(74) Mandataire: Callu-Danseux, Violaine

(56) Documents cités:
- DE-A1-102010 052 313
- DE-A1-102011 001 687
- US-A1- 2012 110 773
- US-A1- 2013 212 827
- US-A1- 2015 013 093

## Description

### DOMAINE TECHNIQUE

La présente invention concerne notamment un adaptateur pour un essuie-glace, en particulier de véhicule automobile.

### ETAT DE L'ART

Une automobile est classiquement équipée d'essuie-glaces pour assurer un lavage du pare-brise et éviter que la vision qu'a le conducteur de son environnement ne soit perturbée. Ces essuie-glaces comprennent en général un bras d'entrainement, effectuant un mouvement de va-et-vient angulaire, et des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, d'étriers articulés qui tiennent la lame racleuse en plusieurs endroits discrets en lui conférant un cintrage lui permettant d'épouser l'éventuelle courbure du pare-brise, soit, dans une version plus récente dénommée *"flat blade"* (pour "lame plate"), d'un ensemble semi-rigide qui maintient la lame racleuse sur toute sa longueur grâce à une ou des vertèbres de cintrage permettant d'appliquer le balai sur le pare-brise sans avoir à utiliser d'étriers.

Dans les deux solutions, le balai est rattaché au bras d'entraînement par un système de connexion comportant un connecteur et un adaptateur. Le connecteur est une pièce qui est solidarisée au balai et qui est en général fixée directement sur la lame racleuse ou sur la *flat blade,* alors que l'adaptateur est solidaire du bras. L'adaptateur est une pièce intermédiaire qui permet la liaison et la fixation du connecteur sur le bras d'entraînement. Il est en général configuré pour être engagé dans une tête ou pièce terminale en forme de chape et à section transversale en U du bras d'entraînement.

Chacun de ces organes (connecteur et adaptateur) comprend des moyens d'articulation configurés pour coopérer avec des moyens complémentaires de l'autre organe, pour définir au moins un axe transversal d'articulation des organes, qui est un axe d'articulation du balai vis-à-vis du bras. Dans la technique actuelle, l'un des organes, tels que le connecteur, comprend en général un axe physique sensiblement cylindrique qui définit l'axe d'articulation et qui est reçu dans un logement de forme complémentaire de l'autre organe.

L'adaptateur comporte en général un corps configuré pour être engagé dans la pièce terminale du bras de façon à ce que ce corps s'étende au moins en partie entre deux parois latérales sensiblement parallèles de la pièce terminale.

Un adaptateur permet d'associer un balai à un type particulier de pièce terminale. Dans le cas des pièces terminales précitées à section en U, il en existe plusieurs variétés.

On connaît un bras d'essuie-glace dont la pièce terminale porte un capot coulissant en translation longitudinale. Le capot est monté coulissant entre une première position avancée et une seconde position reculée. Outre un intérêt esthétique, ce type de capot peut présenter d'autres fonctions.

Le document US 2013 0212827 A1 montre un adaptateur pour un essuie-glace selon le préambule de la première revendication.

L'invention propose un adaptateur perfectionné et particulièrement adapté mais non exclusivement pour cette technologie de pièce terminale à capot coulissant, qui soit simple, efficace et économique.

### EXPOSE DE L'INVENTION

L'invention est décrite dans le cinquième aspect ci dessous.

Selon un premier aspect, l'invention propose un adaptateur pour un essuie-glace, en particulier de véhicule automobile, comprenant un corps configuré pour être monté dans une chape à section sensiblement en U d'un bras d'essuie-glace, ledit corps ayant en section une forme sensiblement en U et comportant deux parois latérales, délimitées longitudinalement par un bord d'extrémité longitudinale avant et un bord d'extrémité longitudinale arrière et reliées ensemble par une paroi supérieure, ladite paroi supérieure comportant un premier élément en saillie configuré pour s'étendre au moins en partie dans un orifice traversant de ladite chape, caractérisé en ce que ledit premier élément comprend au moins une surface inférieure, qui est orientée vers ladite paroi supérieure, et qui est configurée pour coopérer par appui et/ou glissement avec la chape ou avec un capot monté coulissant sur la chape, pour retenir l'adaptateur vis-à-vis du bras.

L'adaptateur selon l'invention peut comprendre une ou plusieurs des caractéristiques suivantes, prises isolément ou en combinaison les unes avec les autres :
- ledit premier élément en saillie a une forme générale en L ou U,
- ledit premier élément en saillie est agencé au voisinage du bord d'extrémité longitudinale arrière,
- ledit premier élément en saillie comprend une patte comportant ladite surface inférieure,
- ladite patte est sensiblement parallèle à ladite paroi supérieure,
- ledit corps a une forme générale allongée dont l'axe d'allongement est sensiblement parallèle aux parois latérales et supérieure,
- ladite patte a une orientation générale longitudinale,
- le premier élément en saillie comprend une portion inférieure qui prolonge directement la paroi supérieure et qui porte ladite patte,
- le premier élément en saillie présente une forme et des dimensions configurées pour que ledit premier élément en saillie coopère avec l'orifice traversant de ladite chape,
- le premier élément en saillie comprend une surface supérieure qui est orientée du côté opposé à la paroi supérieure et qui est configurée pour coopérer par glissement avec une partie du capot coulissant du bras,
- la patte est configurée pour coopérer par appui et/ou glissement avec la chape,
- la patte prolonge directement la portion inférieure, à l'opposé de la paroi supérieure,
- la patte est décalée longitudinalement par rapport à ladite portion inférieure,
- la patte s'étend longitudinalement au-delà du bord d'extrémité longitudinale arrière,
- la patte est configurée pour coopérer par appui et/ou glissement avec le capot coulissant du bras,
- le premier élément en saillie comprend une portion intermédiaire qui prolonge la portion inférieure pour porter une portion supérieure formant la patte,
- la portion inférieure comprend une surface supérieure qui est en regard de ladite surface inférieure de manière à former une zone de réception du capot,
- lesdites surfaces supérieure et inférieure sont sensiblement parallèles,
- le corps comprend sur une face latérale externe de chacune de ses parois latérales, au moins un, et de préférence un unique, deuxième élément en saillie configuré pour être engagé dans une encoche traversante de ladite chape,
- le premier élément en saillie est agencé au voisinage du bord d'extrémité longitudinale arrière tandis que ledit deuxième élément en saillie est agencé au voisinage du bord d'extrémité longitudinale avant.

La présente invention concerne également un ensemble comportant un bras d'essuie-glace et un adaptateur tel que décrit ci-dessus.

De préférence, ledit bras a une forme générale allongée et comporte une chape à section sensiblement en U et comportant deux parois longitudinales latérales reliées ensemble par une paroi longitudinale supérieure qui comporte un orifice de logement dudit élément en saillie de l'adaptateur, ledit bras comportant également un capot monté coulissant sur la chape en translation longitudinale. Lorsque l'adaptateur comporte des deuxièmes éléments en saillie, des encoches peuvent être réalisées dans les parois longitudinales latérales de la chape pour recevoir ces deuxièmes éléments en saillie,

On pourra prévoir que, dans un tel ensemble :
- le capot est configuré pour être déplaçable entre une position avancée où il est éloigné dudit orifice et une position reculée où il recouvre au moins en partie ledit premier élément en saillie,
- le capot comprend dans la paroi supérieure une encoche de réception d'au moins une partie dudit premier élément en saillie. Cette encoche peut venir en butée contre une portion intermédiaire du premier élément en saillie, ou contre la patte.

La présente invention concerne également un ensemble comportant un balai d'essuie-glace et un adaptateur tel que décrit ci-dessus, ledit adaptateur étant de préférence monté sur ledit balai par l'intermédiaire d'un connecteur.

Selon un second aspect, l'invention concerne un adaptateur pour un essuie-glace, en particulier de véhicule automobile, comprenant un corps de forme allongé et configuré pour être monté dans une chape à section sensiblement en U d'un bras d'essuie-glace, ledit corps ayant en section une forme sensiblement en U et comportant deux parois longitudinales latérales reliées ensemble par une paroi longitudinale supérieure, caractérisé en ce que ledit corps comprend à au moins une de ses extrémités longitudinales au moins une patte qui s'étend en direction longitudinale et qui est configurée pour coopérer avec le bras ou un organe porté par le bras afin de retenir l'adaptateur vis-à-vis du bras ou de cet organe.

L'adaptateur selon l'invention peut comprendre une ou plusieurs des caractéristiques suivantes, prises isolément ou en combinaison les unes avec les autres :
- ladite au moins une patte s'étend longitudinalement depuis la paroi supérieure et/ou depuis une des ou les parois latérales,
- chacune desdites parois latérales comprend une patte longitudinale,
- chaque patte longitudinale a une forme plane,
- lesdites parois latérales et supérieure se prolongent longitudinalement en partie pour former une patte commune, à section sensiblement en U,
- ledit corps présente un plan de symétrie parallèle aux parois latérales et passant sensiblement au milieu de la paroi supérieure,
- ledit corps comprend sur une face latérale externe de chacune de ses parois latérales, au moins un, et de préférence un unique, deuxième élément en saillie configuré pour être engagé dans une encoche traversante de ladite chape,
- la au moins une patte et le deuxième élément en saillie sont disposés longitudinalement de part et d'autre d'un axe d'articulation de l'adaptateur passant par des moyens correspondants, et
- ledit corps est formé d'une seule pièce.

L'invention concerne également un ensemble comportant un bras d'essuie-glace et un adaptateur tel que décrit ci-dessus.

De préférence, ledit bras a une forme générale allongée et comporte une chape à section sensiblement en U et comportant deux parois longitudinales latérales reliées ensemble par une paroi longitudinale supérieure, ledit bras comportant également un capot monté coulissant sur la chape en translation longitudinale.

Avantageusement, ladite au moins une patte est configurée pour coopérer par appui avec le capot, et en particulier avec au moins un rail de guidage en coulissement du capot.

Le capot peut être configuré pour être déplaçable en translation longitudinale entre une première position et une deuxième position où ledit au moins un rail de guidage retient l'adaptateur en coopérant avec ladite au moins une patte.

Un embout d'extrémité peut être monté à une extrémité longitudinale libre de la chape et ferme, au niveau de cette extrémité, un espace s'étendant entre les parois latérales et supérieure de la chape.

De préférence, ladite au moins une patte est configurée pour coopérer par appui avec ledit embout.

Avantageusement, ladite au moins une patte est engagée dans un évidement réalisé sur la face dudit embout tournée vers l'intérieur de la chape.

La présente invention concerne également un ensemble comportant un balai d'essuie-glace et un adaptateur tel que décrit ci-dessus, ledit adaptateur étant de préférence monté sur ledit balai par l'intermédiaire d'un connecteur.

Selon un troisième aspect, l'invention concerne un adaptateur pour un essuie-glace, en particulier de véhicule automobile, comprenant un corps configuré pour être monté dans une chape à section sensiblement en U d'un bras d'essuie-glace, ledit corps ayant en section une forme sensiblement en U et comportant deux parois longitudinales latérales reliées ensemble par une paroi longitudinale supérieure, caractérisé en ce qu'il comprend un dispositif de fixation, qui est configuré pour former une boucle fermée autour de ladite chape ou d'un organe monté sur la chape. Le dispositif de fixation est notamment configuré pour prendre une position ouverte et une position fermée dans laquelle il forme ladite boucle fermée.

L'adaptateur selon l'invention peut comprendre une ou plusieurs des caractéristiques suivantes, prises isolément ou en combinaison les unes avec les autres :
- ledit dispositif est souple, déformable et/ou articulable,
- ledit dispositif comprend un premier élément de retenue et un second élément de retenue, le premier élément de retenue comportant une extrémité reliée audit corps et une extrémité opposée comportant un moyen de fixation configuré pour coopérer avec un moyen de fixation complémentaire d'une extrémité du second élément de retenue dont l'extrémité opposée est reliée audit corps,
- ledit moyen de fixation est un crochet, un rebord ou une patte,
- ledit corps a une forme générale allongée et est reliée à une extrémité longitudinale, ou à chacune de ses extrémités longitudinales, à un dispositif de fixation,
- le dispositif comprend deux sangles de fixation parallèles et à distance l'une de l'autre,
- ledit dispositif de fixation comprend un capot rabattable configuré pour recouvrir au moins en partie ladite chape,
- ledit capot rabattable est articulé autour d'un axe longitudinal,
- ledit capot rabattable a une forme générale en U et comprend deux parois latérales reliées ensemble par une paroi supérieure, la paroi supérieure du capot rabattable étant configurée pour recouvrir la chape ou l'organe monté sur la chape, et ses parois latérales étant configurées pour s'étendre le long de deux côtés opposés de la chape,
- l'une des parois latérales du capot rabattable comprend sur un bord longitudinal au moins un moyen de fixation du capot, et l'autre de ses parois latérales comprend sur un bord longitudinal au moins une charnière d'articulation du capot,
- ledit corps est formé d'une seule pièce,

L'invention concerne également un ensemble comportant un bras d'essuie-glace et un adaptateur tel que décrit ci-dessus.

Avantageusement, ledit bras a une forme générale allongée et comporte une chape à section sensiblement en U et comportant deux parois longitudinales latérales reliées ensemble par une paroi longitudinale supérieure, ledit bras comportant également un capot monté coulissant sur la chape en translation longitudinale, ledit dispositif de fixation étant configuré pour former une boucle fermée autour d'au moins le capot coulissant.

La présente invention concerne également un ensemble comportant un balai d'essuie-glace et un adaptateur tel que décrit ci-dessus, ledit adaptateur étant de préférence monté sur ledit balai par l'intermédiaire d'un connecteur.

Selon un quatrième aspect, l'invention concerne un adaptateur pour un essuie-glace, en particulier de véhicule automobile, comprenant un corps de forme allongée configuré pour être solidarisé à une chape à section sensiblement en U d'un bras d'essuie-glace, ledit corps ayant en section une forme sensiblement en U et comportant deux parois longitudinales latérales reliées ensemble par une paroi longitudinale supérieure, caractérisé en ce qu'il comprend à une extrémité longitudinale du corps un carénage solidaire du corps, apte à un logement de réception d'une partie d'extrémité de la chape, lesdites parois latérales du corps comportant des moyens d'articulation configurés pour recevoir des premiers moyens complémentaires d'un connecteur d'essuie-glace, notamment associés à des premiers moyens élastiquement déformables d'encliquetage élastique configurés pour coopérer avec lesdits moyens complémentaires lors de leur réception par lesdits moyens d'articulation. Les parois latérales du corps comportent en outre des seconds moyens élastiquement déformables d'encliquetage élastique configurés pour coopérer avec des seconds moyens complémentaires de ladite chape. L'adaptateur selon l'invention peut comprendre une ou plusieurs des caractéristiques suivantes, prises isolément ou en combinaison les unes avec les autres :
- lesdites parois latérales du corps comprennent respectivement deux orifices qui sont alignés et forment lesdits moyens d'articulation,
- lesdites parois latérales du corps comprennent respectivement deux fentes longitudinales qui s'étendent depuis lesdits orifices du côté opposé audit capot,
- chacune desdites parois latérales du corps comprend une patte longitudinale inférieure dont une partie supérieure définit une partie périphérique de l'orifice correspondant, ladite patte inférieure étant au moins en partie élastiquement déformable et formant lesdits premiers moyens d'encliquetage élastique,
- ladite patte inférieure a une extrémité longitudinale libre présentant une rampe de glissement configurée pour coopérer avec un tourillon du connecteur,
- chacune desdites parois latérales du corps comprend une patte supérieure dont une partie inférieure définit une partie périphérique de l'orifice correspondant, ladite patte supérieure étant au moins en partie élastiquement déformable et formant lesdits seconds moyens d'encliquetage élastique,
- ladite patte supérieure a une forme générale en L et comprend deux portions sensiblement rectilignes, dont une première portion s'étend depuis l'orifice correspondant du côté opposé audit capot et est reliée du côté opposé au capot à une seconde portion qui s'étend vers le bas,
- les secondes portions des pattes supérieures comprennent respectivement deux doigts transversaux s'étendant dans des directions opposées et configurés pour être engagés par encliquetage élastique dans des encoches de ladite chape,
- lesdits doigts s'étendent dans un même plan longitudinal passant sensiblement par lesdites pattes inférieures,
- le carénage présente en section une forme sensiblement en U, ledit carénage comportant deux parois latérales reliées ensemble par une paroi supérieure, qui s'étendent respectivement parallèlement et à distance des parois latérales et de la paroi supérieure du corps, de façon à définir entre les parois du carénage et les parois du corps ledit logement de réception,
- le carénage présente une paroi d'extrémité avant s'étendant transversalement aux deux parois latérales, ladite paroi d'extrémité avant formant une paroi de butée pour la partie d'extrémité de la chape, et
- l'adaptateur est formé d'une seule pièce.

L'invention concerne également un ensemble comportant un bras d'essuie-glace et un adaptateur tel que décrit ci-dessus.

Avantageusement, ledit bras a une forme générale allongée et comporte une chape à section sensiblement en U et comportant deux parois longitudinales latérales reliées ensemble par une paroi longitudinale supérieure.

De préférence, ladite chape comprend des encoches sur ses parois longitudinales latérales, qui débouchent respectivement sur des bords longitudinaux inférieurs libres de ces parois, lesdits seconds moyens d'encliquetage élastique de l'adaptateur coopérant avec au moins certaines desdites encoches.

Lesdits seconds moyens d'encliquetage élastique de l'adaptateur peuvent coopérer avec les encoches de la chape les plus éloignées d'une extrémité longitudinale libre de la chape.

La présente invention concerne également un ensemble comportant un balai d'essuie-glace et un adaptateur tel que décrit ci-dessus, ledit adaptateur étant de préférence monté sur ledit balai par l'intermédiaire d'un connecteur.

Selon un cinquième aspect, l'invention concerne un adaptateur pour un essuie-glace, en particulier de véhicule automobile, comprenant un corps de forme allongée et configuré pour être monté dans une chape à section sensiblement en U d'un bras d'essuie-glace, ledit corps ayant en section une forme sensiblement en U et comportant deux parois longitudinales latérales reliées ensemble par une paroi longitudinale supérieure, ladite paroi supérieure comporte un moyen de fixation configuré pour être logé dans au moins un orifice traversant de ladite chape, ledit moyen de fixation comportant deux éléments distincts en saillie de la paroi supérieure porteurs respectivement d'une surface de contact avec un bord d'un même orifice de la chape, au moins un desdits deux éléments distincts étant flexbile, caractérisé en ce que le ou les éléments en sailli flexibles sont articulés autour d'un axe formé par la ligne de jonction de la paroi supérieure avec ledit élément en sailli correspondante, le ou les éléments en sailli ayant une forme générale en L et comprenant une portion sensiblement rectiligne s'étendant vers le haut depuis ladite paroi supérieure et reliée à son extrémité supérieure à un rebord orienté vers une extrémité longitudinale du corps.

L'adaptateur selon l'invention peut comprendre une ou plusieurs des caractéristiques suivantes, prises isolément ou en combinaison les unes avec les autres :
- les deux éléments en saillie dudit moyen de fixation comportent un premier élément en saillie flexible, articulé autour d'un axe formé par la ligne de jonction de la paroi supérieure avec ledit premier élément en saillie, et un deuxième élément en saillie prenant la forme d'un plot fixe,
- le deuxième élément en saillie a une forme générale parallélépipédique,
- les deux éléments en saillie dudit moyen de fixation comportent deux éléments en saillie flexible, articulés respectivement autour d'un axe formé par la ligne de jonction de la paroi supérieure avec ledit élément en saillie correspondant,
- les surfaces de contact portées respectivement par les éléments en saillie sont orientées à l'opposé l'une de l'autre,
- le rebord est configuré pour coopérer par appui avec ladite chape pour retenir l'adaptateur vis-à-vis de la chape,
- la paroi supérieure porte un troisième élément en saillie,
- le troisième élément en saillie a une forme générale cylindrique,
- le troisième élément en saillie est configuré pour être engagé dans un autre orifice de ladite chape,
- les trois éléments en saillie (850a, 850b, 850c) de la paroi supérieure (826c) sont alignés, et
- ledit corps est formé d'une seule pièce.

L'invention concerne également un ensemble comportant un bras d'essuie-glace et un adaptateur tel que décrit ci-dessus.

Avantageusement, ledit bras a une forme générale allongée et comporte une chape à section sensiblement en U et comportant deux parois longitudinales latérales reliées ensemble par une paroi longitudinale supérieure, ledit bras comportant également un capot monté coulissant sur la chape en translation longitudinale.

La présente invention concerne également un ensemble comportant un balai d'essuie-glace et un adaptateur tel que décrit ci-dessus, ledit adaptateur étant de préférence monté sur ledit balai par l'intermédiaire d'un connecteur.

Selon un sixième aspect, l'invention concerne un adaptateur pour un essuie-glace, en particulier de véhicule automobile, comprenant un corps de forme allongée et configuré pour être monté dans une chape à section sensiblement en U d'un bras d'essuie-glace, ledit corps ayant en section une forme sensiblement en U et comportant deux parois longitudinales latérales reliées ensemble par une paroi longitudinale supérieure, caractérisé en ce que l'adaptateur est configuré pour être engagé dans ladite chape par translation dans une direction sensiblement perpendiculaire à ladite paroi supérieure, et en ce que lesdites parois latérales comprennent des pattes élastiquement déformables en direction transversale et configurées pour coopérer par encliquetage élastique avec des moyens complémentaires de la chape et/ou d'un organe monté sur la chape, lesdites pattes comportant des dents de retenue configurées pour coopérer avec la chape et/ou ledit organe.

L'adaptateur selon l'invention peut comprendre une ou plusieurs des caractéristiques suivantes, prises isolément ou en combinaison les unes avec les autres :
- chacune desdites parois latérales comporte deux pattes élastiquement déformables,
- chacune desdites pattes a une orientation générale perpendiculaire à ladite paroi supérieure,
- chacune desdites pattes est délimitée par deux fentes parallèles et traversantes formées sur la paroi latérale correspondante et débouchant sur un bord inférieur libre de cette paroi latérale,
- chacune desdites pattes comporte au moins une dent de retenue configurée pour coopérer avec la chape et/ou ledit élément.
- chacune desdites pattes comprend une dent supérieure et une dent inférieure,
- les dents de chaque patte sont à distance l'une de l'autre et définissent entre elles un espace de réception d'une partie de la chape et/ou dudit organe,
- la dent supérieure de chaque patte présente une rampe de glissement,
- la dent supérieure présente une surface inférieure d'appui et/ou de butée,
- la dent inférieure présente une surface supérieure d'appui et/ou de butée, et
- ledit corps est formé d'une seule pièce.

L'invention concerne également un ensemble comportant un bras d'essuie-glace et un adaptateur tel que décrit ci-dessus.

Avantageusement, ledit bras a une forme générale allongée et comporte une chape à section sensiblement en U et comportant deux parois longitudinales latérales reliées ensemble par une paroi longitudinale supérieure, ledit bras comportant également un capot monté coulissant sur la chape en translation longitudinale.

Le capot est avantageusement monté coulissant selon une direction perpendiculaire à la direction d'insertion de l'adaptateur dans la chape.

De préférence, lesdites pattes sont configurées pour coopérer par encliquetage élastique avec le capot, et en particulier avec des rails de guidage en coulissement du capot.

Le capot peut être configuré pour être déplaçable en translation longitudinale entre une première position et une deuxième position où lesdits rails de guidage retiennent l'adaptateur en coopérant avec lesdites pattes.

La présente invention concerne également un ensemble comportant un balai d'essuie-glace et un adaptateur tel que décrit ci-dessus, ledit adaptateur étant de préférence monté sur ledit balai par l'intermédiaire d'un connecteur.

L'invention concerne également un procédé de montage d'un adaptateur dans une chape d'un tel ensemble, procédé au cours duquel on déplace le capot coulissant selon une direction longitudinale dans une position reculée proche de la chape, dans laquelle des rails de guidage portés par le capot sont disposés sur le passage d'insertion de l'adaptateur dans la chape, au cours duquel on insère l'adaptateur dans la chape par translation selon une direction sensiblement perpendiculaire à la direction longitudinale de coulissement du capot, alors que le capot coulissant est dans ladite position reculée, et au cours duquel on continue la translation de l'adaptateur en déformant élastiquement les pattes de l'adaptateur au contact des rails de guidage jusqu'à un encliquetage élastique desdits rails de guidage et desdites pattes revenues en position initiale.

Selon un septième aspect, l'invention concerne un adaptateur pour un essuie-glace, en particulier de véhicule automobile, comprenant un corps configuré pour être monté dans une chape à section sensiblement en U d'un bras d'essuie-glace, ledit corps ayant en section une forme sensiblement en U et comportant deux parois latérales reliées ensemble par une paroi supérieure, ladite paroi supérieure comportant un premier élément en saillie configuré pour s'étendre au moins en partie dans un orifice traversant de ladite chape, caractérisé en ce qu'au moins l'une de ses parois comprend une languette élastiquement déformable configurée pour prendre appui sur face interne de ladite chape afin de supprimer un jeu entre l'adaptateur et cette face interne.

L'adaptateur selon l'invention peut comprendre une ou plusieurs des caractéristiques suivantes, prises isolément ou en combinaison les unes avec les autres :
- ladite au moins une languette est située sur la paroi supérieure du corps,
- une languette est située sur la paroi supérieure du corps et dans lequel une languette est située sur au moins une paroi latérale,
- ladite languette est située au voisinage d'une extrémité longitudinale du corps et ledit élément en saillie est situé à une extrémité longitudinale opposée du corps,
- ladite languette est configurée pour être déformable entre une position non contrainte où elle est en saillie de la paroi correspondante du corps et une position rabattue où elle est dans le plan du corps,
- ladite languette est située dans un évidement ou orifice du corps,
- ledit premier élément en saillie comprend au moins une surface inférieure, qui est orientée vers ladite paroi supérieure, et qui est configurée pour coopérer par appui et/ou glissement avec la chape ou avec un capot monté coulissant sur la chape, pour retenir l'adaptateur vis-à-vis de la chape,
- ledit premier élément en saillie a une forme générale en L ou U,
- ledit corps présente un plan de symétrie parallèle aux parois latérales et passant sensiblement au milieu de la paroi supérieure,
- ledit plan de symétrie traverse sensiblement en son milieu ladite languette, et
- ledit corps comprend sur une face latérale externe de chacune de ses parois latérales, au moins un, et de préférence un unique, deuxième élément en saillie configuré pour être engagé dans une encoche traversante de ladite chape.

L'invention concerne également un ensemble comportant un bras d'essuie-glace et un adaptateur tel que décrit ci-dessus.

Avantageusement, ledit bras a une forme générale allongée et comporte une chape à section sensiblement en U et comportant deux parois longitudinales latérales reliées ensemble par une paroi longitudinale supérieure qui comporte un orifice de logement dudit premier élément en saillie de l'adaptateur, ledit bras comportant également un capot monté coulissant sur la chape en translation longitudinale.

De préférence, le capot est configuré pour être déplaçable entre une première position où il est éloigné dudit orifice et une deuxième position où il est rapproché dudit orifice, voire recouvre en partie ledit orifice et/ou une partie dudit élément.

Le capot peut comprendre une encoche de réception d'au moins une partie dudit élément.

La présente invention concerne également un ensemble comportant un balai d'essuie-glace et un adaptateur tel que décrit ci-dessus, ledit adaptateur étant de préférence monté sur ledit balai par l'intermédiaire d'un connecteur.

Selon un huitième aspect, l'invention concerne un adaptateur pour un essuie-glace, en particulier de véhicule automobile, comprenant un corps configuré pour être monté dans une chape à section sensiblement en U d'un bras d'essuie-glace, ledit corps ayant en section une forme sensiblement en U et comportant deux parois latérales reliées ensemble par une paroi supérieure, ladite paroi supérieure comportant un élément en saillie configuré pour s'étendre au moins en partie dans un orifice traversant de ladite chape, caractérisé en ce qu'il comprend en outre au moins une agrafe configurée pour être rapportée et fixée sur ledit élément afin de verrouiller l'adaptateur vis-à-vis de ladite chape.

L'adaptateur selon l'invention peut comprendre une ou plusieurs des caractéristiques suivantes, prises isolément ou en combinaison les unes avec les autres :
- ledit élément a une forme générale en T et comprend une première paroi sensiblement parallèle à la paroi supérieure et une seconde paroi de liaison de la première paroi à la paroi supérieure, et sensiblement perpendiculaire à la paroi supérieure,
- ladite première paroi s'étend sensiblement dans un plan longitudinal médian de symétrie du corps,
- l'agrafe a une forme générale en U et comprend deux doigts sensiblement parallèles et reliés par une de leurs extrémités à une base commune,
- les doigts sont élastiquement déformables par rapprochement et/ou éloignement l'un de l'autre,
- les doigts comprennent des crochets de retenue à leurs extrémités opposées à la base commune, et
- ledit corps comprend sur une face latérale externe de chacune de ses parois latérales, au moins un, et de préférence un unique, plot en saillie configuré pour être engagé dans une encoche traversante de ladite chape.

L'invention concerne également un ensemble comportant un bras d'essuie-glace et un adaptateur tel que décrit ci-dessus.

Avantageusement, ledit bras a une forme générale allongée et comporte une chape à section sensiblement en U et comportant deux parois longitudinales latérales reliées ensemble par une paroi longitudinale supérieure qui comporte un orifice de logement dudit élément en saillie de l'adaptateur, ledit bras comportant également un capot monté coulissant sur la chape en translation longitudinale.

De préférence, le capot est configuré pour être déplaçable entre une première position où il est éloigné dudit orifice et une deuxième position où il est rapproché dudit orifice, voire recouvre en partie ledit orifice et/ou une partie dudit élément.

Le capot peut comprendre une encoche de réception d'au moins une partie dudit élément et/ou d'une partie de ladite agrafe.

La présente invention concerne également un ensemble comportant un balai d'essuie-glace et un adaptateur tel que décrit ci-dessus, ledit adaptateur étant de préférence monté sur ledit balai par l'intermédiaire d'un connecteur.

L'invention concerne encore un procédé de montage d'un ensemble tel que décrit ci-dessus, dans lequel il comprend les étapes consistant à :
a) monter l'adaptateur dans la chape du bras, de façon à ce que ledit élément traverse l'orifice de la chape,
b) monter l'agrafe contre la chape et autour dudit premier élément en saillie, et
c) déplacer le capot sur la chape.

A l'étape b), l'agrafe est de préférence montée sur la chape et l'organe en la faisant glisser sur une paroi supérieure de la chape.

L'étape c) peut consister à déplacer le capot sur la chape jusqu'à ce qu'au moins une partie de l'agrafe soit logée dans l'encoche du capot, de façon à verrouiller l'agrafe vis-à-vis de l'organe.

Selon un neuvième aspect, l'invention concerne un adaptateur pour un essuie-glace, en particulier de véhicule automobile, caractérisé en ce qu'il a une forme allongée et est configuré pour être solidarisé à un capot d'un bras d'essuie-glace, ledit adaptateur comportant un carénage avant et un corps arrière qui a en section une forme sensiblement en U et comporte deux parois latérales reliées ensemble par une paroi supérieure, ledit carénage avant comportant une paroi avant qui est configurée pour s'étendre en avant dudit corps arrière pour définir avec ledit corps un espace longitudinal de réception d'au moins une partie dudit capot.

L'adaptateur selon l'invention peut comprendre une ou plusieurs des caractéristiques suivantes, prises isolément ou en combinaison les unes avec les autres :
- ledit carénage a une forme générale en U dont la partie médiane est formée par ladite paroi avant, et les parties latérales sont formées par des parois latérales qui s'étendent vers l'arrière depuis ladite partie avant,
- ledit carénage comprend une ouverture supérieure de montage dudit capot dans ledit espace,
- lesdites parois latérales du corps comprennent respectivement deux orifices alignés,
- lesdites parois latérales du corps comportent des moyens élastiquement déformables d'encliquetage élastique configurés pour coopérer avec des moyens complémentaires dudit capot,
- chacune desdites parois latérales du corps comprend une patte longitudinale élastiquement déformable et formant lesdits moyens d'encliquetage élastique,
- ladite patte a une forme générale en L et comprend deux portions sensiblement rectilignes, dont une première portion s'étend vers l'arrière dans le prolongement du corps arrière et est reliée à une seconde portion qui s'étend vers le bas,
- ladite patte comporte une encoche de réception d'un moyen complémentaire dudit capot,
- ladite encoche de réception est réalisée dans la face inférieure de la première portion,
- les secondes portions des pattes supérieures comprennent respectivement deux doigts transversaux s'étendant dans des directions opposées et configurés pour former des moyens d'actionnement,
- lesdits doigts s'étendent dans un même plan longitudinal, et
- l'adaptateur est formé d'une seule pièce.

L'invention concerne également un ensemble comportant un bras d'essuie-glace et un adaptateur tel que décrit ci-dessus.

Avantageusement, ledit bras a une forme générale allongée et comporte une chape à section sensiblement en U et comportant deux parois longitudinales latérales reliées ensemble par une paroi longitudinale supérieure, et un capot monté coulissant en translation longitudinale sur ladite chape.

La présente invention concerne également un ensemble comportant un balai d'essuie-glace et un adaptateur tel que décrit ci-dessus, ledit adaptateur étant de préférence monté sur ledit balai par l'intermédiaire d'un connecteur.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective d'un essuie-glace, cet essuie-glace comportant un balai d'essuie-glace, un bras d'entraînement du balai, et un système de connexion du balai au bras,
- la figure 2 est une vue schématique en perspective et à plus grande échelle d'une partie d'un bras d'essuie-glace équipé notamment d'un capot coulissant,
- la figure 3 est une vue schématique en perspective éclatée du bras d'essuie-glace de la figure 2,
- les figures 4a et 4b sont des vues schématiques en perspective d'un adaptateur selon un premier aspect de l'invention,
- la figure 5 est une vue schématique en perspective et avec arrachement partiel d'un bras d'essuie-glace équipé de l'adaptateur des figures 4a et 4b, le capot coulissant n'étant pas ici représenté,
- les figures 6a, 6b et 7 sont des vues schématiques en perspective de l'ensemble formé par le bras équipé du capot et de l'adaptateur des figures 4a et 4b, le capot étant représenté avec un arrachement partiel sur la figure 7,
- les figures 8a et 8b sont des vues schématiques en perspective d'un adaptateur selon une variante de réalisation du premier aspect de l'invention,
- la figure 9 est une vue schématique en perspective d'un bras d'essuie-glace équipé de l'adaptateur des figures 8a et 8b, le capot coulissant n'étant pas représenté,
- les figures 10a, 10b et 11 sont des vues schématiques en perspective de l'ensemble formé par le bras équipé du capot et de l'adaptateur des figures 8a et 8b, le capot étant représenté avec un arrachement partiel sur la figure 11,
- la figure 12 est une vue schématique en perspective d'un adaptateur selon un second aspect de l'invention,
- les figures 13a et 13b sont des vues schématiques en perspective du dessous de l'ensemble formé par le bras et l'adaptateur de la figure 12, le capot coulissant n'étant pas représenté,
- la figure 14 est une vue schématique en perspective d'un adaptateur selon une variante de réalisation du second aspect de l'invention,
- les figures 15a et 15b sont des vues schématiques en perspective du dessous de l'ensemble formé par le bras et l'adaptateur de la figure 14, le capot coulissant étant représenté sur la figure 15b,
- la figure 16 est une vue schématique en perspective d'un adaptateur selon un troisième aspect de l'invention,
- les figures 17a et 17b sont des vues schématiques en perspective de l'ensemble formé par le bras et l'adaptateur de la figure 16,
- les figures 18a à 18c sont des vues schématiques en perspective de l'ensemble formé par le bras et un adaptateur selon une variante de réalisation du troisième aspect de l'invention
- les figures 19a et 19b sont des vues schématiques en perspective d'un adaptateur selon un quatrième aspect de l'invention,
- les figures 20a à 20c et 21 sont des vues schématiques en perspective de l'ensemble formé par au moins le bras et l'adaptateur des figures 19a et 19b, les figures 20a à 20c illustrant des étapes de mise en place de l'adaptateur sur le bras, et la figure 21 illustrant l'ensemble formé par le bras (arraché partiellement) et l'adaptateur, en regard d'un connecteur,
- la figure 22 est une vue schématique en perspective d'un adaptateur selon un cinquième aspect de l'invention,
- la figure 23 est une vue schématique en perspective de l'ensemble formé par le bras et l'adaptateur de la figure 22,
- les figures 24a et 24b sont des vues schématiques en perspective et en coupe transversale d'un adaptateur selon un sixième aspect de l'invention,
- les figures 25 et 26 sont des vues schématiques de l'ensemble formé par le bras et l'adaptateur des figures 24a et 24b, la figure 25 étant une représentation éclatée en perspective et la figure 26 étant une vue en coupe de l'ensemble assemblé,
- la figure 27 est une vue schématique en perspective d'un adaptateur selon un septième aspect de l'invention,
- la figure 28 est une vue schématique en coupe axiale de l'ensemble formé par le bras et l'adaptateur de la figure 27,
- les figures 29a à 29b et 30 sont des vues schématiques en perspective de l'ensemble formé par le bras et un adaptateur selon un huitième aspect de l'invention, la figure 29b étant une vue éclatée de chacun des composants de cet ensemble,
- la figure 31 est une vue schématique en perspective de l'ensemble formé par le bras et un adaptateur selon un neuvième aspect de l'invention,
- la figure 32 est une vue schématique en perspective de l'adaptateur de la figure 31,
- les figures 33a à 33d sont des vues schématiques en perspective d'étapes de montage de l'ensemble formé par le bras et l'adaptateur de la figure 31, et
- les figures 34 et 35 sont des vues schématiques en perspective du dessous de l'ensemble, un connecteur étant illustré sur la figure 34.

### DESCRIPTION DETAILLEE

Il faut noter que les figures exposent l'invention de manière détaillée pour mettre en oeuvre l'invention, lesdites figures pouvant bien entendu servir à mieux définir l'invention le cas échéant.

Dans la description qui suit, les dénominations longitudinales ou latérales se réfèrent à l'orientation du balai d'essuie-glace ou du bras d'entraînement selon l'invention. La direction longitudinale correspond à l'axe principal du balai ou du bras dans lequel il s'étend, alors que les orientations latérales correspondent à des droites concourantes, c'est-à-dire qui croisent la direction longitudinale, notamment perpendiculaires à l'axe longitudinal du balai ou du bras dans son plan de rotation. Pour les directions longitudinales, les dénominations arrière ou avant s'apprécient par rapport au point de fixation du balai sur le bras, la dénomination arrière correspondant à la partie où le bras et un demi-balai s'étendent, ou par rapport au point de fixation du bras au véhicule. Enfin, les directions référencées comme supérieures ou inférieures correspondent à des orientations perpendiculaires au plan de rotation du balai d'essuie-glace, la dénomination inférieure contenant le plan du pare-brise. Les directions interne, externe, intérieure ou extérieure peuvent faire référence à une pièce dans sa globalité, et concernent par exemple l'intérieur ou l'extérieur de cette pièce.

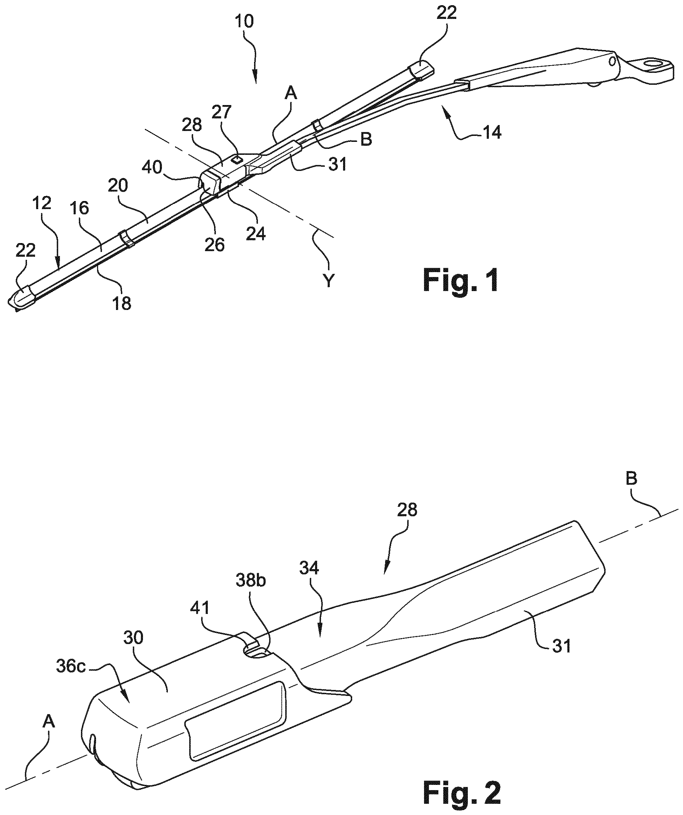

Il est illustré à la figure 1 un essuie-glace 10 comportant notamment un balai 12 et un bras 14 d'entraînement du balai 12.

Le balai 12 est de préférence du type flat blade et comprend un corps longitudinal 16, une lame d'essuyage 18, en général en caoutchouc, et au moins une vertèbre (non visible) qui rigidifie la lame et favorise son application sur un pare-brise de véhicule.

Le corps 16 du balai 12 peut comporter un déflecteur aérodynamique supérieur 20 destiné à améliorer le fonctionnement du système d'essuyage, le but de ce déflecteur étant d'améliorer le plaquage du balai sur le pare-brise et donc la performance aérodynamique de l'essuie-glace.

Le balai 12 peut comprendre en outre des embouts d'extrémité 22 ou agrafes d'accrochage de la lame 18 et de la vertèbre sur le corps 16, ces embouts 22 étant situés à chacune des extrémités longitudinales du corps 16.

Le balai 12 comprend sensiblement en son milieu un connecteur 24 intermédiaire. Un adaptateur 26 solidaire du bras 14 est monté sur le connecteur 24 de façon à garder un degré de liberté en pivotement autour d'un axe d'articulation Y qui est un axe transversal sensiblement perpendiculaire à l'axe longitudinal du balai 12. Ce degré de liberté autorise un pivotement du balai 12 vis-à-vis du bras 14 et permet ainsi au balai de suivre la courbure du pare-brise lors de ses déplacements. L'adaptateur 26 peut être désolidarisé du bras 14 par appui sur un bouton d'actionnement, ici un bouton poussoir 27, porté par l'adaptateur. Le bras 14 est destiné à être entraîné par un moteur pour suivre un mouvement angulaire de va-et-vient permettant d'évacuer l'eau et éventuellement d'autres éléments indésirables recouvrant le pare-brise. L'adaptateur 26 assure la liaison du balai 12 au bras 14 et en particulier à une tête ou pièce terminale du bras qui peut être formée d'une seule pièce avec le bras ou rapportée et fixée sur celui-ci.

Dans le cas de la figure 2, la pièce terminale du bras comprend ou forme une chape 28 à section transversale sensiblement en U, sur laquelle est monté coulissant un capot 30.

La chape 28 a une forme allongée dont l'axe d'allongement A est en général sensiblement parallèle à l'axe d'allongement ou longitudinal du balai 12. La chape 28 comprend une partie 31 de liaison au reste du bras 14, par exemple par sertissage. Cette partie 31 a une forme générale allongée et s'étend le long d'un axe B sensiblement parallèle à l'axe A et à distance de cet axe, comme cela est visible aux figures 1 et 2. La partie 31 est reliée à une extrémité arrière ou intérieure du reste de la chape 28.

La chape 28 comprend deux parois latérales 32a, 32b dont les bords longitudinaux supérieurs sont reliés entre eux par une paroi transversale supérieure 34. Les parois 32a, 32b et 34 délimitent entre elles un espace de logement de l'adaptateur 26.

Les parois 32a, 32b comprennent des encoches 33a, 33b, 33c, 33d traversantes qui débouchent au niveau de leurs bords longitudinaux inférieurs. Les encoches 33a, 33b, 33c, 33d de chaque paroi 32a, 32b sont disposées longitudinalement les unes derrière les autres et sont ici au nombre de quatre. Elles sont à distance longitudinale les unes des autres. L'encoche avant 33a de chaque paroi, située la plus en avant, a une largeur relativement faible par rapport aux autres encoches et s'étend sensiblement sur toute la hauteur de la paroi 32a, 32b correspondante. L'encoche arrière 33d, située la plus en arrière, a une hauteur relativement faible par rapport aux autres encoches. Enfin, les encoches 33b, 33c intermédiaires ont une largeur relativement importante par rapport à l'encoche avant 33a et s'étendent sensiblement jusqu'à mi-hauteur de la paroi 32a, 32b correspondante.

La paroi supérieure 34 comprend deux ouvertures 38a, 38b traversantes disposées longitudinalement l'une derrière l'autre. L'ouverture avant 38a a un contour sensiblement circulaire et l'ouverture arrière 38b a un contour sensiblement rectangulaire.

Le capot 30 recouvre la chape 28 de la pièce terminale et a en section une forme sensiblement en U. Il a une forme allongée et comprend deux parois longitudinales latérales 36a, 36b dont les bords longitudinaux supérieurs sont reliés ensemble par une paroi longitudinale supérieure 36c. Les bords avant des parois 36a, 36b, 36c sont en outre reliés entre eux par une paroi avant 36d du capot. Comme on le voit en figure 2, la paroi supérieure 36c du capot recouvre la paroi supérieure 34 de la chape et ses parois latérales 36a, 36b s'étendent de part et d'autre de la chape, en regard des parois latérales 32a ,32b. La paroi avant 36d du capot s'étend en avant de la chape et comprend une fente 40 de réception d'une partie supérieure du déflecteur 20 du balai 12, visible à la figure 1. Enfin, la paroi supérieure 36c du capot 30 comprend à son extrémité arrière une encoche 41 de forme générale en U, qui débouche sur le bord arrière libre de la paroi 36c et qui est orientée vers l'arrière ou l'extérieur du bras.

Le capot 30 est mobile en translation longitudinale sur la chape du bras, depuis une position reculée représentée en figure 2, jusqu'à une position avancée. En position avancée, l'encoche 41 du capot 30 peut être située au niveau de l'ouverture 38a de la chape et, en position reculée, cette encoche 41 peut être située au niveau de l'ouverture 38b. Pour cela, le capot comprend des moyens de guidage en translation destinés à coopérer avec la chape. Dans l'exemple représenté, chaque paroi latérale 36a, 36b du capot comprend un rail de guidage 42 au niveau de son bord longitudinal inférieur. Chaque rail 42 se présente sous la forme d'une série de rebords longitudinaux 42a, 42b, 42c sensiblement coplanaires.

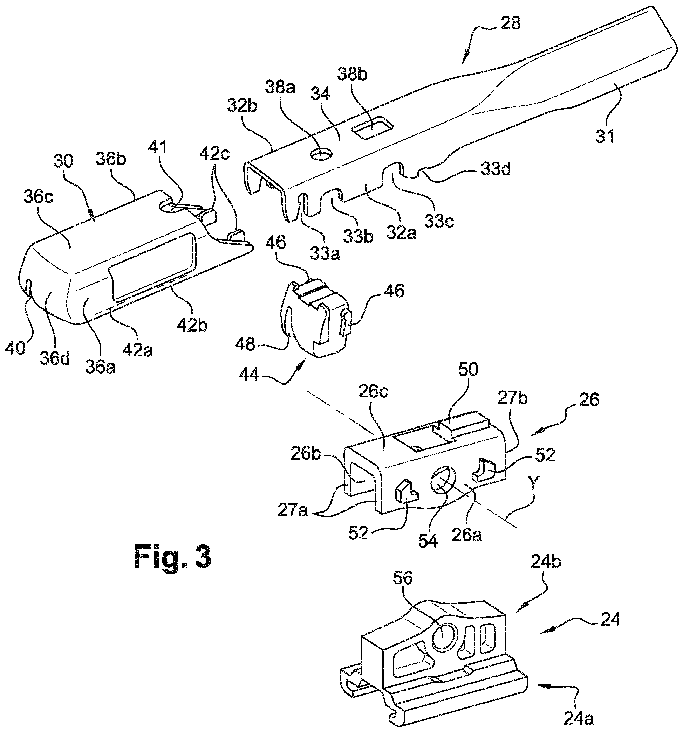

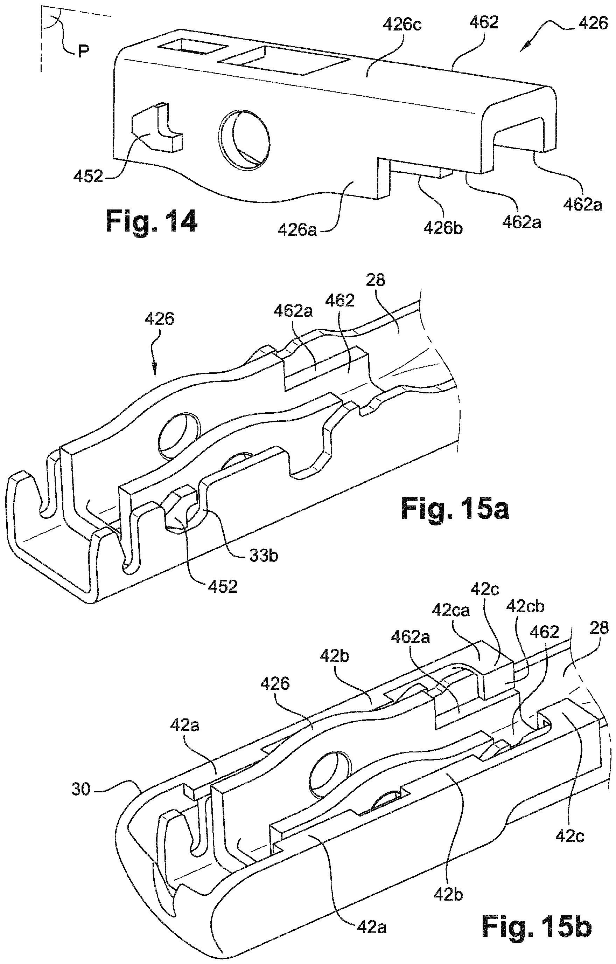

Les rebords longitudinaux 42a, 42b, 42c de chaque paroi 36a, 36b sont disposées longitudinalement les uns derrière les autres et sont ici au nombre de trois. Ils sont à distance longitudinale les uns des autres. Le rebord avant 42a de chaque paroi, situé le plus en avant est représenté en traits pointillés en figure 3 et mieux visible en figure 15b. Le rebord arrière 42c, situé le plus en arrière, a une longueur plus faible que le rebord 42a et a une forme générale en L. Ce rebord 42c forme un crochet dont une première portion 42ca sensiblement parallèle à la paroi supérieure 36c relie la paroi latérale 36a, 36b correspondante à une seconde portion 42cb s'étendant parallèlement à cette paroi latérale 36a, 36b et à distance de celle-ci. Enfin, le rebord 42b intermédiaire a une longueur similaire à celle du rebord 42a et est représenté en traits pointillés en figure 3 et mieux visible en figure 15b.

Lors du coulissement longitudinal du capot 30 sur la chape du bras, les rebords 42a, 42b, 42c du capot peuvent coopérer par glissement avec les bords inférieurs libres des parois latérales 32a, 32b de la chape, et les portions 42cb des rebords 42c peuvent coopérer par glissement avec les faces internes en regard de ces parois latérales 32a, 32b.

Comme on le voit en figure 3, un embout d'extrémité 44 est monté à l'extrémité libre de la chape 28 du bras, pour fermer l'espace précité de la chape dans lequel est monté l'adaptateur 26. Cet embout 44 se présente sous la forme d'un bloc de matière, de préférence élastique, qui comprend des nervures latérales 46 destinées à être engagées dans les encoches avant 33a des parois latérales 32a, 32b de la chape, pour assurer la retenue de l'embout vis-à-vis de la chape. L'embout 44 comprend en outre une fente 48 de réception d'une partie supérieure du déflecteur 20 du balai 12, visible à la figure 1. L'embout 44 est par exemple réalisé par injection moulage.

L'adaptateur 26, visible en figure 3, comprend un corps configuré pour être monté dans la chape et ayant en section une forme sensiblement en U. Il comporte deux parois latérales 26a, 26b, délimités longitudinalement par un bord d'extrémité longitudinale avant 27a et un bord d'extrémité longitudinale arrière 27b, et reliées ensemble par une paroi supérieure 26c. La paroi supérieure 26c comprend un premier élément en saillie 50 de la paroi supérieure, en forme de plot, configuré pour être logé dans l'ouverture 38b de la paroi supérieure 34 de la chape.

Les parois latérales 26a, 26b comprennent chacune deux deuxièmes éléments en saillie 52 de la paroi latérale associée, sous forme de plots, configurés pour être engagés dans les encoches intermédiaires 33b, 33c de la paroi latérale 32a, 32b correspondante de la chape. Ces deuxièmes éléments en saillie 52 peuvent coopérer avec le capot 30 coulissant pour assurer la retenue de l'adaptateur dans la chape. Dans sa position avancée, les rebords 42a, 42b du capot 30 sont décalés longitudinalement des encoches intermédiaires 33b, 33c, et se retrouvent par exemple respectivement en avant de l'encoche 33b et entre les encoches 33b, 33c. Dans cette position, les encoches 33b, 33c sont libres et l'adaptateur 26 peut être logé dans la chape par translation dans une direction sensiblement perpendiculaire à la paroi supérieure 34 de la chape (du bas vers le haut), jusqu'à ce que les deuxièmes éléments en saillie 52 s'engagent dans les encoches intermédiaires 33b, 33c. Le démontage de l'adaptateur est également autorisé.

Dans sa position reculée, les rebords 42a, 42b du capot 30 se retrouvent respectivement sous les encoches intermédiaires 33b, 33c. Dans cette position, les encoches 33b, 33c sont fermées et l'adaptateur 26 peut être empêché de sortir de la chape par appui ou butée de ses deuxièmes éléments en saillie 52 sur les rebords 42a, 42b du capot.

Les parois latérales 26a, 26b comprennent respectivement deux orifices 54 traversants alignés. Ces orifices sont sensiblement situés au milieu des parois 26a, 26b, entre les deuxièmes éléments en saillie 52. Les orifices 54 définissent l'axe Y sensiblement transversal d'articulation du connecteur 24 vis-à-vis de l'adaptateur 26 et donc du balai 12 vis-à-vis du bras 14.

Le connecteur 24 comprend essentiellement deux parties, une partie inférieure 24a de sertissage ou de fixation au reste du balai 12 et une partie supérieure 24b destinée à être logée entre les parois latérales 26a, 26b de l'adaptateur. Cette partie supérieure 24b comprend un orifice traversant 56 destiné à être aligné sur l'axe Y. Les orifices 54, 56 sont destinés à recevoir une tige cylindrique définissant l'axe d'articulation Y. En variante, l'un des organes parmi l'adaptateur 26 et le connecteur 24 pourrait comprendre des tourillons cylindriques centrés sur l'axe Y et destinés à être engagés par encliquetage élastique dans l'orifice ou les orifices de l'autre de ces organes.

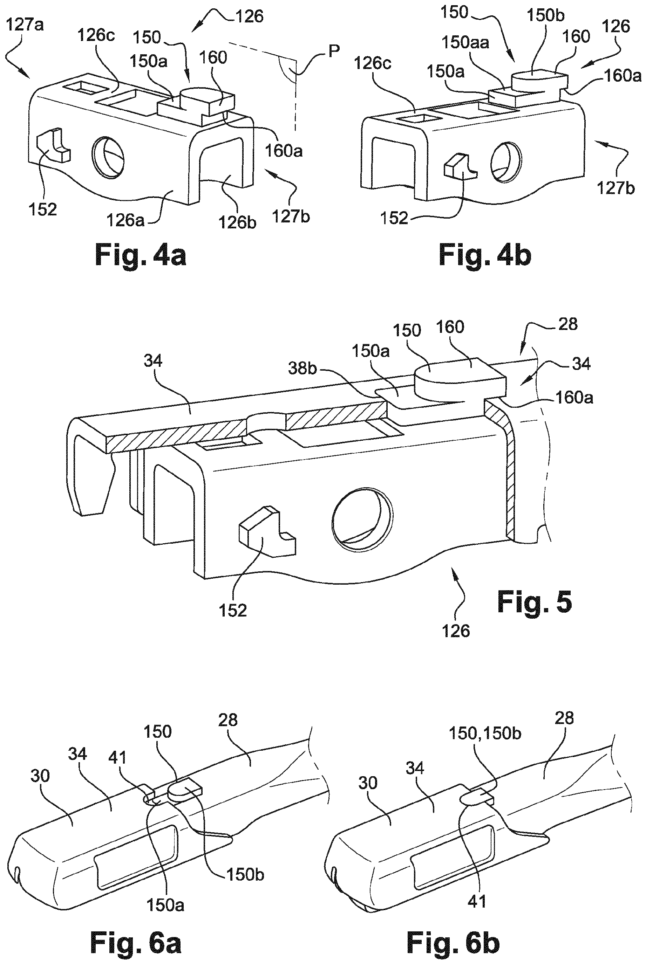

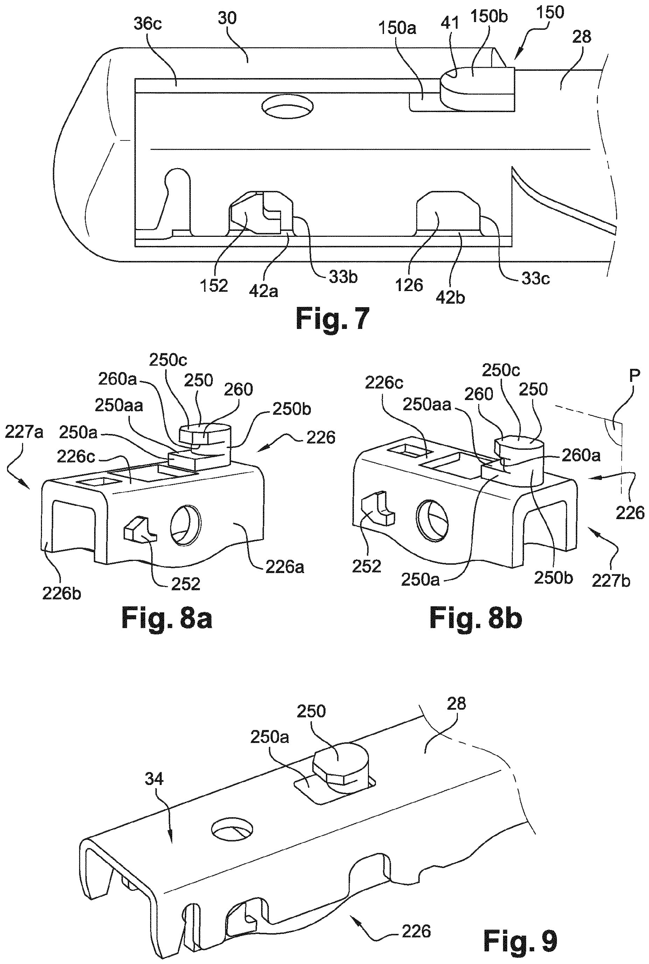

Les figures 4a à 11 illustrent un premier aspect de l'invention, les figures 4a à 7 représentant un premier mode de réalisation de cet aspect et les figures 8 à 11 représentant une variante de réalisation.

Selon ce premier aspect de l'invention, le premier élément en saillie 150, 250 précité en saillie sur la paroi supérieure 126c, 226c de l'adaptateur 126, 226 comprend au moins une surface inférieure 160a, 260a, qui est orientée vers la paroi supérieure 126c, 226c, et qui est configurée pour coopérer par appui et/ou glissement avec la chape 28 ou avec le capot 30, pour retenir l'adaptateur vis-à-vis du bras.

Dans le cas des figures 4a à 7, le premier élément en saillie 150 comprend une surface inférieure 160a, qui est orientée vers ladite paroi supérieure 126c, et qui est configurée pour coopérer par appui et/ou glissement avec la chape pour retenir l'adaptateur vis-à-vis de la chape.

Dans l'exemple représenté, le premier élément en saillie 150 a une forme générale étagée ou en L. Il comprend une marche ou portion inférieure 150a sensiblement parallélépipédique, similaire au premier élément en saillie 50 de la figure 3, qui prolonge directement la paroi supérieure de l'adaptateur et porte une marche ou portion supérieure 150b décalée longitudinalement vers l'arrière par rapport à la portion inférieure 150a.

La portion inférieure 150a a une forme et des dimensions déterminées pour être engagée avec de faibles jeux ou sans jeu dans l'ouverture 38b de la chape. Cette portion inférieure 150a définit une surface supérieure 150aa parallèle à la paroi supérieure 126c de l'adaptateur et qui est orientée du côté opposé à cette paroi supérieure, de sorte qu'elle est destinée à coopérer par glissement avec la face interne de la paroi supérieure 36c du capot 30, comme on peut l'apprécier aux figures 6a et 6b qui montrent respectivement le capot en positions avancée et reculée.

La portion supérieure 150b a une forme générale parallélépipédique dont l'extrémité avant est arrondie. Elle forme une patte longitudinale arrière 160 dont la surface inférieure définit la surface inférieure 160a précitée. La patte est décalée longitudinalement par rapport à la portion inférieure 150a et elle est agencée de manière à s'étendre longitudinalement au-delà du bord d'extrémité longitudinale arrière 127b. Cette surface 160a est parallèle à la paroi supérieure 126c de l'adaptateur et destinée à coopérer par glissement avec la face supérieure de la paroi supérieure 34 de la chape, comme cela est visible en figure 5 notamment. On constate aux figures 6b et 7 que l'encoche 41 a une forme complémentaire de l'extrémité avant de la portion supérieure 150b.

L'adaptateur 126 est ici formé d'une seule pièce et présente un plan longitudinal médian P de symétrie parallèle aux parois latérales 126a, 126b et passant sensiblement au milieu de la paroi supérieure 126c. Ce plan P traverse le premier élément en saillie 150 sensiblement en son milieu (figure 4a).

La coopération du premier élément en saillie 150 et en particulier de sa patte 160 avec la chape 28 du bras permet de maintenir l'adaptateur 126 vis-à-vis du bras. Ce premier élément en saillie 150, formant moyen de retenue de l'adaptateur, est ici situé au voisinage de l'extrémité arrière de l'adaptateur 126. Il permet ainsi d'assurer une retenue de l'extrémité arrière de l'adaptateur vis-à-vis de la chape, et peut permettre de se passer d'une partie des deuxièmes éléments en saillie de l'adaptateur. L'adaptateur 126 des figures 4a à 7 est en effet dépourvu de tels deuxièmes éléments en saillie à l'arrière et comprend seulement deux deuxièmes éléments en saillie à l'avant 152, qui sont situés au voisinage de l'extrémité avant de l'adaptateur et qui sont d'une part destinés à être engagés dans les encoches intermédiaires 33b de la chape lorsque le capot est en position avancée sur la chape, et d'autre part à coopérer avec les rebords avant 42a précités du capot lorsque ce dernier est en position reculée sur la chape (figure 7).

Le montage de l'adaptateur par rapport à la chape est réalisé en insérant la portion supérieure 150b dans l'orifice de la chape puis en basculant l'adaptateur autour du bord avant délimitant l'orifice. On pousse alors l'adaptateur suffisamment pour que la patte 260 puisse ensuite être rabattue contre la paroi supérieure 34 de la chape, en basculant en sens inverse l'adaptateur. La portion inférieure 150a du premier élément en saillie est ensuite ajustée dans l'orifice de la chape avant son blocage en position par coulissement du capot 30.

Dans le cas des figures 8 à 11, le premier élément en saillie 250 comprend une surface inférieure 260a, qui est orientée vers ladite paroi supérieure 226c de l'adaptateur 226, et qui est configurée pour coopérer par appui et/ou glissement avec le capot 30 pour retenir l'adaptateur vis-à-vis de la chape 28 et du capot.

Dans l'exemple représenté, le premier élément en saillie 250 a une forme générale en U. Il comprend une portion inférieure 250a sensiblement parallélépipédique, similaire au premier élément en saillie 50 de la figure 3, une portion intermédiaire 250b sensiblement cylindrique, et une portion supérieure 250c définissant une patte 260 orientée longitudinalement vers l'avant.

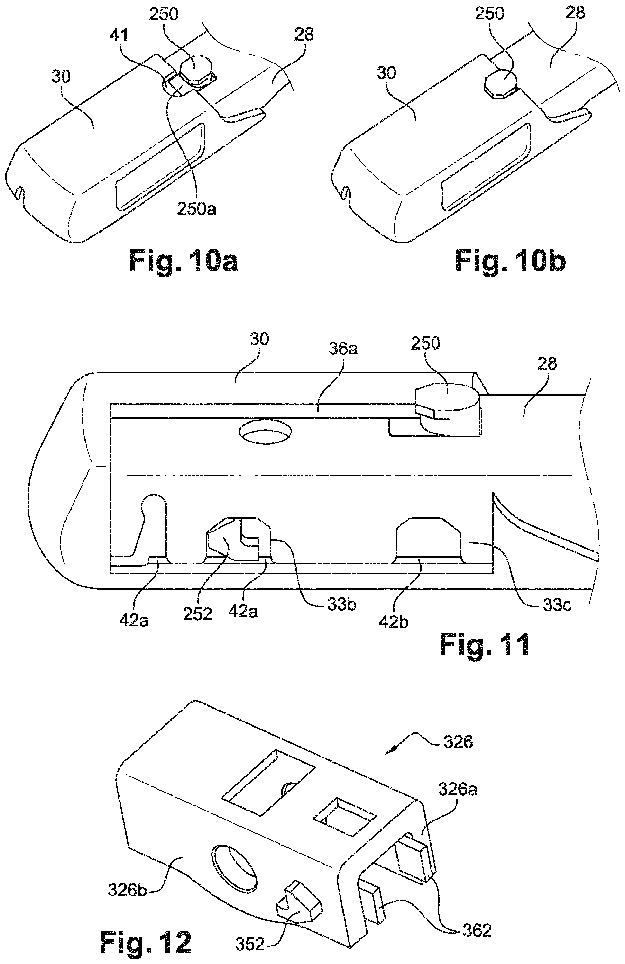

La portion inférieure 250a a une forme et des dimensions déterminées pour être engagée avec de faibles jeux ou sans jeu dans l'ouverture 38b de la chape. Cette portion 250a définit une surface supérieure 250aa parallèle à la paroi supérieure 226c de l'adaptateur et destinée à coopérer par glissement avec la face interne de la paroi supérieure 36c du capot 30, comme on peut l'apprécier aux figures 10a et 10b qui montrent respectivement le capot en positions avancée et reculée.

La portion intermédiaire 250b est destinée à être engagée dans l'encoche 41 du capot 30 et à épouser sa forme sensiblement sans jeu. La portion supérieure 250c a une forme générale parallélépipédique dont l'extrémité arrière est arrondie et les angles de son extrémité avant sont biseautés.

La patte 260 définit la surface inférieure 260a précitée. Cette surface 260a est parallèle à la surface supérieure 250aa et en regard de cette dernière, à une distance déterminée pour former une zone de réception du capot 30. Cette surface supérieure 260a est destinée à coopérer par glissement avec la face supérieure de la paroi supérieure 36c du capot 30, comme cela est visible en figure 11 notamment.

L'adaptateur 226 est ici formé d'une seule pièce et présente un plan longitudinal médian P de symétrie parallèle aux parois latérales 226a, 226b et passant sensiblement au milieu de la paroi supérieure 226c. Ce plan P traverse le premier élément en saillie 250 sensiblement en son milieu (figure 8b).

La coopération du premier élément en saillie 250 et en particulier de sa patte 260 avec le capot coulissant du bras permet de maintenir l'adaptateur 226 vis-à-vis du bras. Ce premier élément en saillie 250 formant moyen de retenue est ici situé au voisinage de l'extrémité arrière de l'adaptateur 226. Il permet ainsi d'assurer une retenue de l'extrémité arrière de l'adaptateur vis-à-vis de la chape, et peut permettre de se passer d'une partie des deuxièmes éléments en saillie de l'adaptateur. L'adaptateur 226 des figures 8 à 11 est en effet dépourvu de deuxièmes éléments en saillie à l'arrière et comprend seulement deux deuxièmes éléments en saillie à l'avant avant 252, qui sont situés au voisinage de l'extrémité avant de l'adaptateur et qui sont d'une part destinés à être engagés dans les encoches intermédiaires 33b de la chape lorsque le capot est en position avancée sur la chape, et d'autre part à coopérer avec les rebords 42a précités du capot lorsque ce dernier est en position reculée sur la chape (figure 11).

On comprend que le montage de l'adaptateur dans la chape dans cette variante du premier aspect de l'invention est simplifié par le fait que la portion supérieure 250c formant patte 260 ne s'étend pas au-delà du bord d'extrémité longitudinale arrière de l'adaptateur. Une simple opération de translation permet de faire passer le premier élément en saillie à travers l'orifice de la chape pour offrir une zone de réception au capot coulissant dans sa position reculée.

Les figures 12 à 15b illustrent un second aspect de l'invention, les figures 12 à 13b représentant un premier mode de réalisation de cet aspect et les figures 14 à 15b représentant une variante de réalisation.

Selon ce second aspect de l'invention, le corps de l'adaptateur 326, 426 comprend à au moins une de ses extrémités longitudinales au moins une patte 362, 462 qui s'étend en direction longitudinale et qui est configurée pour coopérer avec le bras 12 ou un organe porté par le bras, tel que le capot 30 ou l'embout 44, afin de retenir l'adaptateur vis-à-vis du bras ou de cet organe.

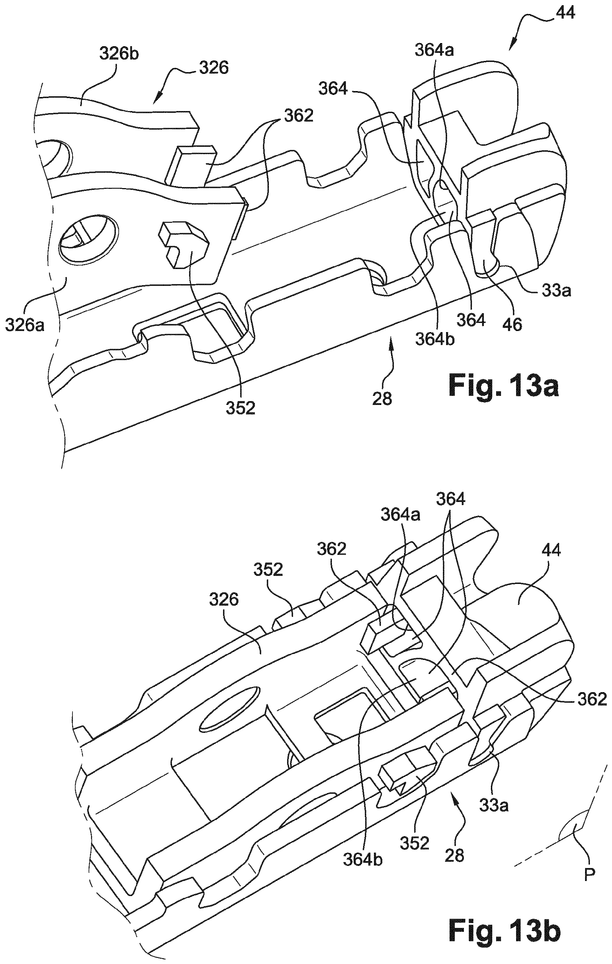

Dans le cas des figures 12 à 13b, l'adaptateur 326 comprend des pattes avant 362 qui sont destinées à être engagées dans des évidements 364 de l'embout 44 monté à l'extrémité avant libre de la chape du bras. Le montage de l'embout 44 a lieu comme expliqué dans ce qui précède, en engageant ses nervures 46 dans les encoches avant 33a de la chape 28.

Les pattes avant 362 s'étendent longitudinalement vers l'avant depuis les parois latérales 326a, 326b. Elles sont sensiblement parallèles. Elles ont chacune une forme générale parallélépipédique. Elles s'étendent sur une majeure partie de la hauteur des parois latérales 326a, 326b.

Les évidements 364 sont situés à l'extrémité arrière de l'embout 44 et communiquent avec l'espace interne de la chape 28 lorsque l'embout 44 est monté à l'extrémité libre de la chape. Chacun des évidements 364 comprend une surface inférieure 364a et une surface supérieure 364b, qui peuvent coopérer par appui avec les extrémités inférieure et supérieure des pattes avant 362, respectivement.

Comme dans l'exemple précédent, l'adaptateur 326 peut comprendre seulement deux deuxièmes éléments en saillie 352 sur les faces externes de ses parois latérales 326a, 326b.

Dans le cas des figures 14 à 15b, l'adaptateur 426 comprend une patte arrière 462 qui est destinée à être engagée dans la chape et à coopérer par appui et/ou butée avec les rebords arrière 42c du capot 30.

La patte 462 s'étend longitudinalement vers l'arrière depuis la paroi supérieure 426c et les parois latérales 426a, 426b. Elle a une forme générale en U et est formé par le prolongement longitudinal arrière des parois 426a, 426b, 426c. Elle s'étend sur toute la largeur de la paroi supérieure 326c et sur une partie de la hauteur des parois latérales 426a, 426b.

Les bords longitudinaux inférieurs libres 462a de la patte 462 sont destinés à coopérer par appui avec les extrémités supérieures libres des portions 42cb des rebords arrières 42c, comme cela est visible en figure 15b.

Comme dans l'exemple précédent, l'adaptateur 426 peut comprendre seulement deux deuxièmes éléments en saillie 452 sur les faces externes de ses parois latérales 426a, 426b. On comprend que dans les deux cas du deuxième aspect de l'invention, la au moins une patte 362, 462 et le deuxième élément en saillie 352, 452 sont disposés longitudinalement de part et d'autre de l'axe d'articulation Y de l'adaptateur tel qu'il est défini par l'alignement des orifices traversants réalisés respectivement dans chaque paroi latérale de l'adaptateur, étant entendu que l'axe d'articulation de l'adaptateur pourrait être défini par l'alignement de moyens mâles si le connecteur associé était équipé de moyens femelles. Cette disposition longitudinale de part et d'autre de l'axe d'articulation permet un montage stable, qu'il soit obtenu avec une patte au voisinage de l'extrémité arrière de l'adaptateur et un deuxième élément en saillie au voisinage de l'extrémité avant, tel que cela est illustré ou dans une disposition inversée où la patte est au voisinage de l'extrémité avant de l'adaptateur et le deuxième élément en saillie au voisinage de l'extrémité arrière.

Dans les deux derniers cas précités, l'adaptateur 326, 426 est formé d'une seule pièce et présente un plan longitudinal médian P de symétrie.

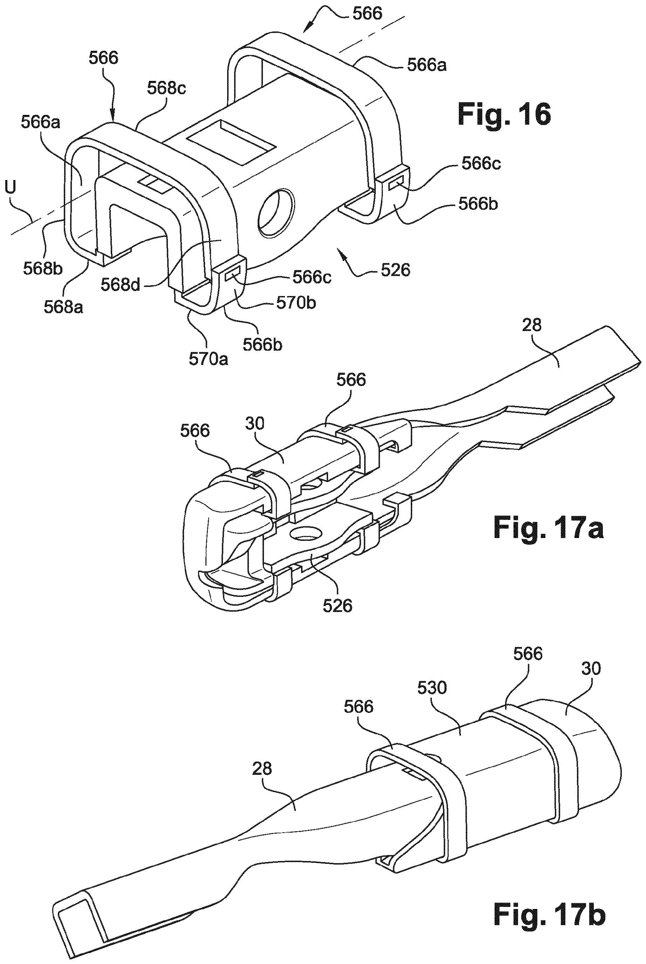

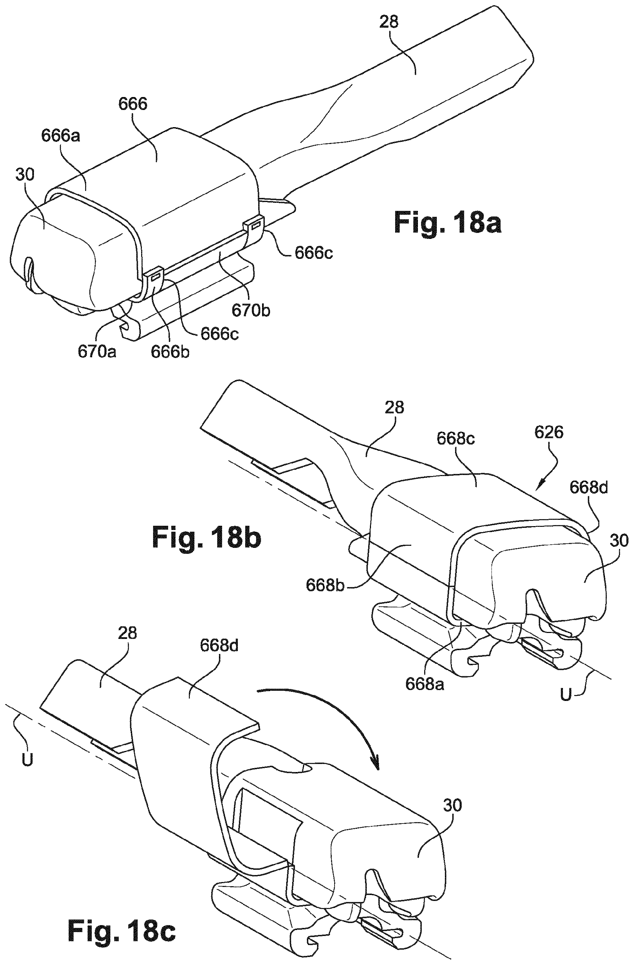

Les figures 16 à 18c illustrent un troisième aspect de l'invention, les figures 16 à 17b représentant un premier mode de réalisation de cet aspect et les figures 18a à 18c représentant une variante de réalisation.

Selon ce troisième aspect de l'invention, l'adaptateur 526, 626 comprend au moins un dispositif de fixation 566, 666, qui est configuré pour former une boucle fermée autour de la chape 28 ou d'un organe monté sur la chape, tel que le capot 30.

Dans le cas des figures 16 à 17b, l'adaptateur 526 comprend un dispositif de fixation formé par deux sangles 566, respectivement avant et arrière. Le sangles sont souples ou élastiquement déformables. Elles sont parallèles et à distance l'une de l'autre.

Dans l'exemple représenté, chaque sangle de fixation peut être déformée par flexion autour d'au moins un axe longitudinal U.

Chaque sangle 566 comprend un premier élément de retenue 566a et un second élément de retenue 566b, le premier élément de retenue comportant une extrémité reliée au corps de l'adaptateur et une extrémité opposée comportant un moyen 566c de fixation configuré pour coopérer avec un moyen de fixation complémentaire d'une extrémité du second élément de retenue dont l'extrémité opposée est reliée au corps. Le moyen de fixation 566c est un crochet, un rebord ou une patte par exemple.

Le corps de l'adaptateur a une forme générale allongée et est reliée à chacune de ses extrémités longitudinales à une sangle de fixation 566. Le premier élément de retenue 566a de chaque sangle comprend une première partie 568a qui s'étend depuis l'extrémité inférieure de la paroi latérale 526a du corps, latéralement vers l'extérieur de ce corps. Cette première partie 568a est sensiblement perpendiculaire à la paroi latérale 526a et est donc sensiblement parallèle à la paroi supérieure 526c. Cette première partie 568a est reliée à son extrémité opposée au corps, à l'extrémité inférieure d'une deuxième partie 568b qui s'étend en regard de la paroi latérale 526a, parallèlement et à distance de cette paroi latérale. Cette deuxième partie 568b est reliée par son extrémité supérieure à une extrémité d'une troisième partie 568c qui s'étend au-dessus de la paroi supérieure 526c, parallèlement et à distance de celle-ci, et est reliée à son extrémité opposée à la deuxième partie 568b à l'extrémité supérieure d'une quatrième partie, qui s'étend en regard de l'autre paroi latérale 526b, parallèlement et à distance de cette paroi latérale. L'extrémité inférieure de cette quatrième partie porte le moyen de fixation 566c précité.

Le second élément de retenue 566b de chaque sangle comprend une première partie 570a qui s'étend depuis l'extrémité inférieure de la paroi latérale 526b du corps, latéralement vers l'extérieur de ce corps. Cette première partie 570a est sensiblement perpendiculaire à la paroi latérale 526b et est donc sensiblement parallèle à la paroi supérieure 526c. Cette première partie 570a est reliée à son extrémité opposée au corps, à l'extrémité inférieure d'une deuxième partie 570b qui s'étend en regard de la paroi latérale 526b, parallèlement et à distance de cette paroi latérale. Cette deuxième partie 570b comprend à son extrémité supérieure le moyen de fixation 566c complémentaire.

En position de fixation de chaque sangle 566 représentée en figure 16, c'est-à-dire de fermeture de la boucle, les moyens de fixation 566c des éléments de retenue coopèrent ensemble, par exemple par emboîtement.

Comme on le voit aux figures 17a et 17b, les sangles 566 sont destinées à entourer le capot 30 monté sur la chape 28.

L'adaptateur 526 peut être solidarisé au bras et en particulier à la chape du bras au moyen des sangles de fixation 566. Pour cela, l'adaptateur est engagé dans la chape du bras comme indiqué dans ce qui précède, et le capot est positionné dans sa position reculée sur la chape. Les sangles de fixation sont alors fermées en les disposant autour du capot et en faisant coopérer leurs moyens de fixation 566c.

Dans le cas des figures 18a à 18c, l'adaptateur 626 comprend un dispositif de fixation sous la forme d'un capot rabattable 666. Le dispositif de fixation est en effet articulable entre une position ouverte, représentée en figure 18c autorisant le montage/démontage de l'adaptateur vis-à-vis de la chape, et une position fermée, représentée aux figures 18a, 18b, de verrouillage de l'adaptateur vis-à-vis de la chape.

Dans l'exemple représenté, le dispositif de fixation comprend un capot rabattable configuré pour recouvrir au moins en partie la chape. Le capot rabattable est ici articulé autour d'un axe longitudinal U. Le capot rabattable a une forme générale en U, la paroi supérieure du capot rabattable (formée par la troisième partie précitée) étant configurée pour recouvrir le capot 30, et ses parois latérales étant configurées pour s'étendre le long de deux côtés opposés du capot 30.

Le capot rabattable 666 comprend un premier élément de sangle 666a et un second élément de retenue 666b. Le premier élément de retenue 666a comprend le capot rabattable sur une portion solidaire du corps de l'adaptateur. Le capot rabattable comprend à une extrémité opposée à cette portion un moyen 666c de fixation configuré pour coopérer avec un moyen de fixation complémentaire d'une extrémité du second élément de retenue dont l'extrémité opposée est reliée au corps. Le moyen de fixation 666c est un crochet, un rebord ou une patte par exemple.

Le premier élément de retenue 666a comprend une première partie 668a qui s'étend depuis l'extrémité inférieure de la paroi latérale (celle équivalente à la paroi 526a de la figure 16) du corps, latéralement vers l'extérieur de ce corps. Cette première partie 668a est sensiblement perpendiculaire à la paroi latérale (526a) et est donc sensiblement parallèle à la paroi supérieure (celle équivalente à la paroi 526c de la figure 16). Cette première partie 668a est reliée à son extrémité opposée au corps, à l'extrémité inférieure d'une deuxième partie 668b qui s'étend en regard de la paroi latérale (526a), parallèlement et à distance de cette paroi latérale. Cette deuxième partie 668b comprend les moyens d'articulation du capot rabattable et est reliée par son extrémité supérieure à une extrémité d'une troisième partie 668c qui s'étend au-dessus de la paroi supérieure (526c), parallèlement et à distance de celle-ci, et est reliée à son extrémité opposée à la deuxième partie 668b à l'extrémité supérieure d'une quatrième partie, qui s'étend en regard de l'autre paroi latérale (celle équivalente à la paroi 526b de la figure 16), parallèlement et à distance de cette paroi latérale. L'extrémité inférieure de cette quatrième partie porte le moyen de fixation 666c précité.

Le second élément de retenue 666b comprend une première partie 670a qui s'étend depuis l'extrémité inférieure de la paroi latérale (526b) du corps, latéralement vers l'extérieur de ce corps. Cette première partie 670a est sensiblement perpendiculaire à la paroi latérale (526b) et est donc sensiblement parallèle à la paroi supérieure (526c). Cette première partie 670a est reliée à son extrémité opposée au corps, à l'extrémité inférieure d'une deuxième partie 670b qui s'étend en regard de la paroi latérale (526b), parallèlement et à distance de cette paroi latérale. Cette deuxième partie 670b comprend à son extrémité supérieure le moyen de fixation 666c complémentaire.

Les moyens d'articulation du capot de retenue peuvent être formés par un fin voile de matière.

En position de fixation du capot rabattable 666 représentée aux figures 18a et 18b, c'est-à-dire de fermeture de la boucle, les moyens de fixation 666c des éléments de sangle coopèrent ensemble, par exemple par emboîtement.

L'adaptateur 626 peut être solidarisé au bras et en particulier à la chape du bras au moyen du capot rabattable 666. Pour cela, l'adaptateur est engagé coulissant dans la chape du bras comme indiqué dans ce qui précède, et le capot coulissant 30 est positionné dans sa position reculée sur la chape. Le dispositif de fixation est alors fermé en rabattant le capot rabattable sur le capot coulissant et en faisant coopérer les moyens de fixation 666c du capot rabattable 566.

Dans les deux dernières variantes, l'adaptateur 526, 626 est formé d'une seule pièce. Son corps est dépourvu sur ses faces latérales externes de ses parois latérales, de deuxièmes éléments en saillie du type de ceux 52, 54 représentés à la figure 3.

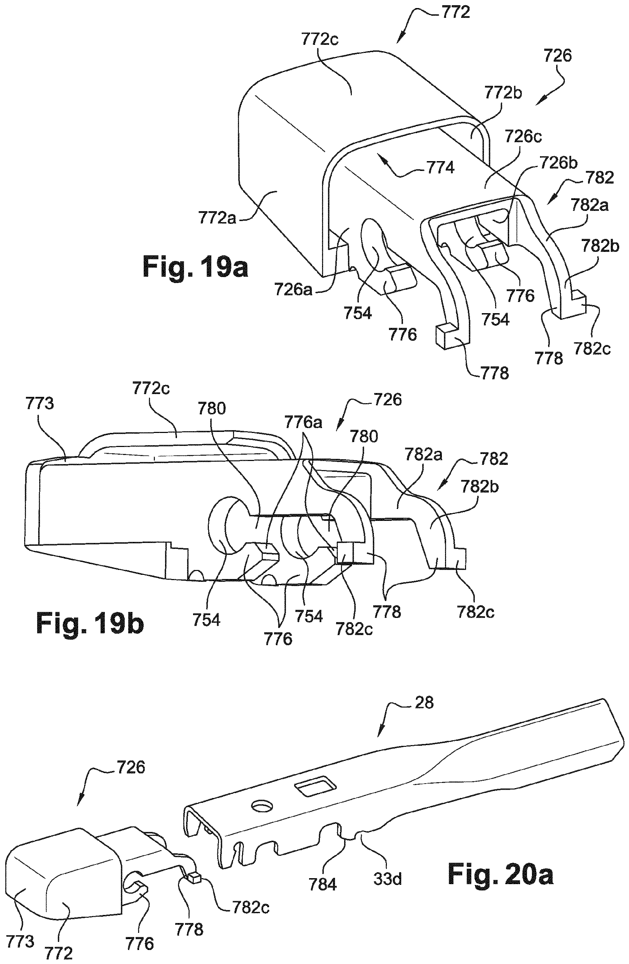

Les figures 19a à 21 illustrent un quatrième aspect de l'invention, dans lequel l'adaptateur 726 comprend un corps de forme allongée configuré pour être solidarisé à la chape 28 à section sensiblement en U d'un bras d'essuie-glace.

Le corps a en section une forme sensiblement en U et comporte deux parois longitudinales latérales 726a, 726b reliées ensemble par une paroi longitudinale supérieure 726c.

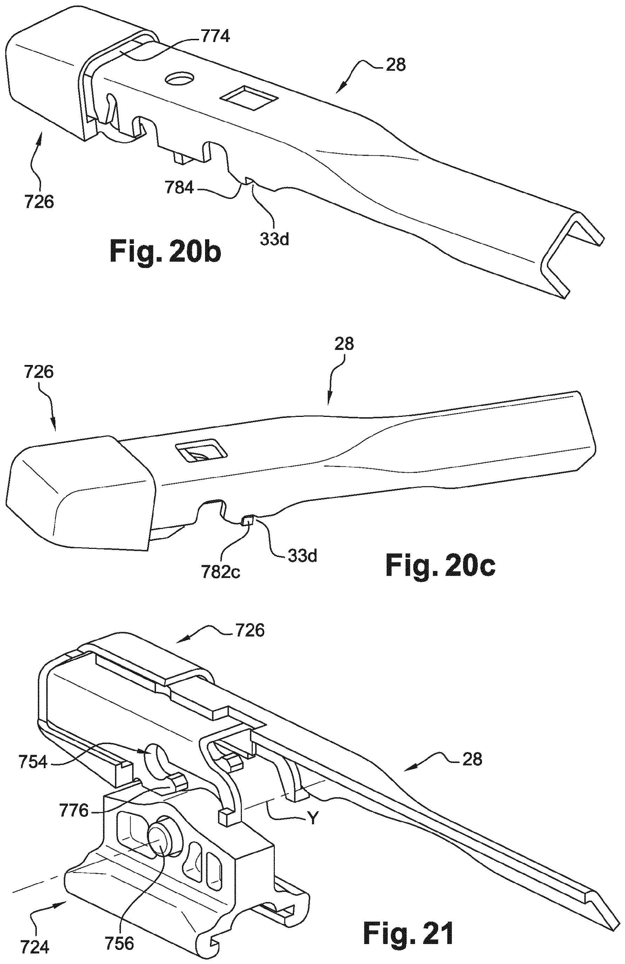

L'adaptateur 726 comprend à une extrémité longitudinale du corps un carénage 772 solidaire du corps. Ce carénage 772 est destiné à remplacer le capot coulissant 30 décrit dans ce qui précède. Le carénage 772 a en section une forme sensiblement en U et comporte deux parois latérales 772a, 772b reliées ensemble par une paroi supérieure 772c, qui s'étendent respectivement parallèlement et à distance des parois latérales 726a, 726b et de la paroi supérieure 726c du corps, de façon à définir, entre ces parois, un logement 774 de réception d'une partie d'extrémité de la chape 28 (figures 20b-21). Ce logement a une forme générale en U. La paroi d'extrémité longitudinale avant 773 du carénage forme une paroi de fond du logement, de sorte qu'elle forme une paroi de butée à l'insertion de l'extrémité de la chape dans le logement 774.

Les parois latérales 726a, 726b du corps comportent des moyens d'articulation 754 configurés pour recevoir des premiers moyens 756 complémentaires du connecteur 724 et associés à des premiers moyens 776 élastiquement déformables d'encliquetage élastique configurés pour coopérer avec ces moyens complémentaires 756 lors de leur réception par les moyens d'articulation 754.

Les parois latérales 726a, 726b du corps comportent en outre des seconds moyens 778 élastiquement déformables d'encliquetage élastique configurés pour coopérer avec des seconds moyens 33d complémentaires de ladite chape 28.

Dans l'exemple représenté, les parois latérales 726a, 726b comprennent respectivement deux orifices 754 qui sont alignés et forment les moyens d'articulation précités.

Les parois latérales 726a, 726b comprennent respectivement deux fentes longitudinales 780, qui s'étendent depuis les orifices 754 du côté opposé audit carénage 772.

Chacune des parois latérales 726a, 726b comprend une patte longitudinale inférieure dont une partie supérieure définit une partie périphérique de l'orifice 754 correspondant. Cette patte inférieure est au moins en partie élastiquement déformable de manière à former lesdits premiers moyens d'encliquetage élastique 776.

La patte inférieure a une extrémité longitudinale libre présentant une rampe de glissement 776a configurée pour coopérer avec les moyens complémentaires 756 du connecteur, qui sont ici un tourillon (figure 21).

Chacune desdites parois latérales 726a, 726b comprend une patte supérieure 782 dont une partie inférieure définit une partie périphérique de l'orifice 754 correspondant. La patte supérieure 782 est au moins en partie élastiquement déformable et forme lesdits seconds moyens d'encliquetage élastique 778.

La patte supérieure 782 a une forme générale en L et comprend deux portions sensiblement rectilignes, dont une première portion 782a s'étend depuis l'orifice 754 correspondant du côté opposé au carénage 772 et est reliée du côté opposé au carénage à une seconde portion 782b qui s'étend vers le bas.

Les secondes portions 782b des pattes supérieures 782 comprennent respectivement deux doigts 782c transversaux s'étendant dans des directions opposées et configurés pour être engagés par encliquetage élastique dans les moyens complémentaires de la chape 28, qui sont ici les encoches arrière 33d.

Les doigts 782c s'étendent dans un même plan longitudinal passant sensiblement par les pattes inférieures précitées.

L'adaptateur 726 est formé d'une seule pièce.

L'adaptateur 726 des figures 19a à 21 peut être monté de la façon suivante. Comme représenté aux figures 20a et 20b, la chape 28 est montée sur le corps de l'adaptateur 726 par translation longitudinale de l'arrière vers l'avant, jusqu'à ce que son extrémité libre avant soit engagée dans le logement 774 précité de l'adaptateur et que les doigts 782c s'engagent par encliquetage et retour élastique vers l'extérieur dans les encoches arrière 33d de la chape 28 (figure 20c). Lors de cette translation, les doigts 782c courent le long du bord d'extrémité libre des parois latérales. Lorsque les doigts arrivent à proximité de l'encoche arrière, ils entrent au préalable en contact avec un bossage 784 formé en amont de l'encoche arrière, et les doigts longent alors le bossage par déformation élastique des pattes supérieures 782. Lorsque le bossage 784 est passé, les pattes tendent à reprendre leur position d'origine et les doigts se logent dans l'encoche, pour y être retenus en dégagement longitudinal par l'épaulement que forme le bossage. Dans cette position, l'adaptateur 726 est solidarisé à la chape 28. L'adaptateur est ensuite monté sur le connecteur 724 en insérant les tourillons 756 du connecteur 724 dans les orifices de l'adaptateur. Les tourillons 756 sont engagés dans les fentes 780 et prennent appui sur les rampes 776a. Une translation longitudinale du connecteur vers l'adaptateur provoque le glissement des tourillons 756 sur les rampes 776a et une déformation des pattes inférieures de l'adaptateur, cette translation étant poursuivie jusqu'à ce que les tourillons s'engagent par encliquetage élastique dans les orifices 754 de l'adaptateur. Les tourillons coopèrent avec ces orifices pour autoriser des déplacements en rotation de l'adaptateur vis-à-vis du connecteur, et inversement, autour de l'axe Y précité.

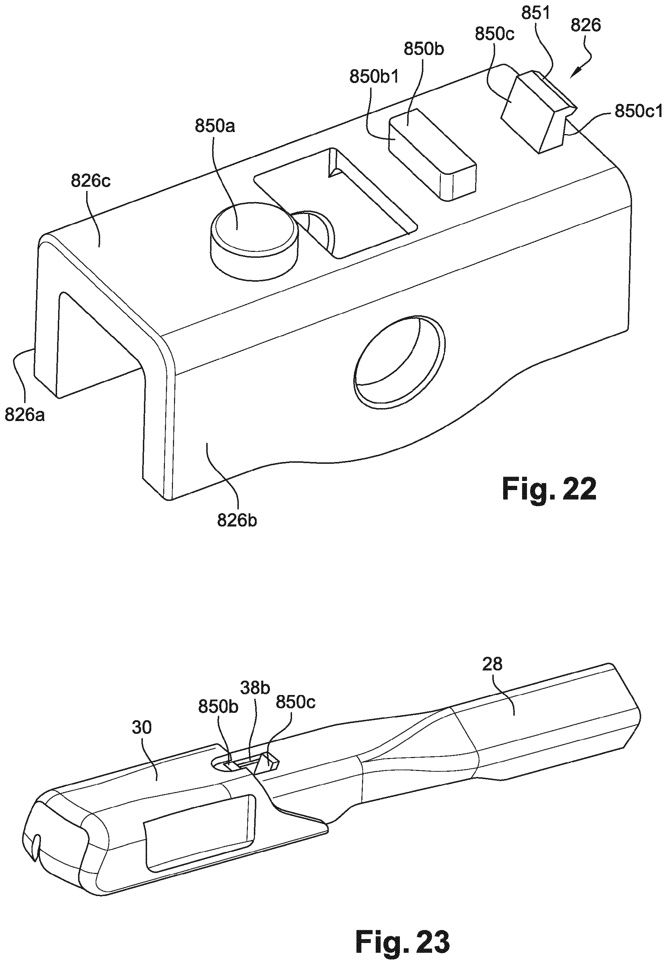

Les figures 22 et 23 illustrent un cinquième aspect de l'invention, dans lequel l'adaptateur 826 comprend un corps de forme allongée configuré pour être solidarisé à la chape 28 à section sensiblement en U d'un bras d'essuie-glace.

Le corps a en section une forme sensiblement en U et comporte deux parois longitudinales latérales 826a, 826b reliées ensemble par une paroi longitudinale supérieure 826c.

La paroi supérieure 826c comporte au moins un élément en saillie 850a, 850b, 850c configuré pour être logé dans au moins un orifice 38a, 38b traversant de la chape 28. Dans l'exemple représenté, l'adaptateur 826 comprend trois éléments en saillie 850a, 850b, 850c, qui sont chacun destinés à être engagés dans un orifice 38a, 38b de la chape, seul un de ces orifices 38b étant visible en figure 23 et étant destiné à recevoir deux des éléments en saillie 850b, 850c. L'orifice 38a de la chape destiné à recevoir l'autre élément en saillie 850a est caché par le capot 30 monté sur la chape 28, en position reculée à la figure 23.

Les éléments en saillie 850a, 850b, 850c sont disposés les uns derrière les autres en direction longitudinale. L'élément avant 850a a une forme générale cylindrique. L'élément intermédiaire 850b a une forme générale parallélépipédique et l'élément arrière 850c a une forme en crochet ou en L. Cet élément arrière 850c comprend une première partie inférieure sensiblement perpendiculaire à la paroi supérieure 826c et s'étendant vers le haut depuis cette dernière. Son extrémité supérieure est reliée à une partie supérieure tel qu'un rebord 851, sensiblement parallèle à la paroi supérieure 826c, et qui s'étend vers l'arrière.

L'élément intermédiaire 850b comprend une surface avant 850b1 orientée longitudinalement vers l'avant et destinée à coopérer par appui avec une surface complémentaire orientée vers l'arrière de l'orifice 38b de la paroi supérieure 34 de la chape 28. L'élément arrière 850c comprend une surface arrière 850c1 orientée longitudinalement vers l'arrière et destinée à coopérer par appui avec une surface complémentaire orientée vers l'avant de l'orifice 38b, comme cela est visible en figure 23. Cette surface arrière 850c1 est ici portée par la partie inférieure de l'élément 850c. On voit également à la figure 23 que le rebord supérieur 851 est configuré pour coopérer par appui avec la face supérieure 34 de la chape 28 pour retenir l'adaptateur vis-à-vis de la chape.

Les surfaces 850b1, 850c1 sont configurées pour être maintenues serrées contre les surfaces complémentaires de l'orifice 38b pour retenir l'adaptateur 826 vis-à-vis de la chape 28. Notamment, on prévoit que l'élément en saillie arrière 850c soit une patte flexible, qui peut être articulée autour d'un axe défini par la jonction de la patte et de la paroi supérieure 826c de l'adaptateur. On définit ainsi les éléments en saillie par un moyen de centrage associé à un orifice de la chape, ici l'élément avant 850a associé à l'orifice 38a, et par un moyen de fixation associé à l'autre orifice et formé par les deux éléments en saillie restants. Au moins un de ces deux éléments restants est une patte flexible.

On pourra prévoir dans une variante non illustré que les deux éléments en saillie formant le moyen de fixation consistent en deux éléments en saillie flexible, articulés respectivement autour d'un axe formé par la ligne de jonction de la paroi supérieure avec ledit élément en saillie correspondant, et disposés en regard de sorte que les surfaces de contact portées respectivement par les éléments en saillie sont orientées à l'opposé l'une de l'autre.

Le corps de l'adaptateur 826 est ici dépourvu de plot en saillie sur ses parois latérales 826a, 826b. L'adaptateur 826 est ici formé d'une seule pièce.

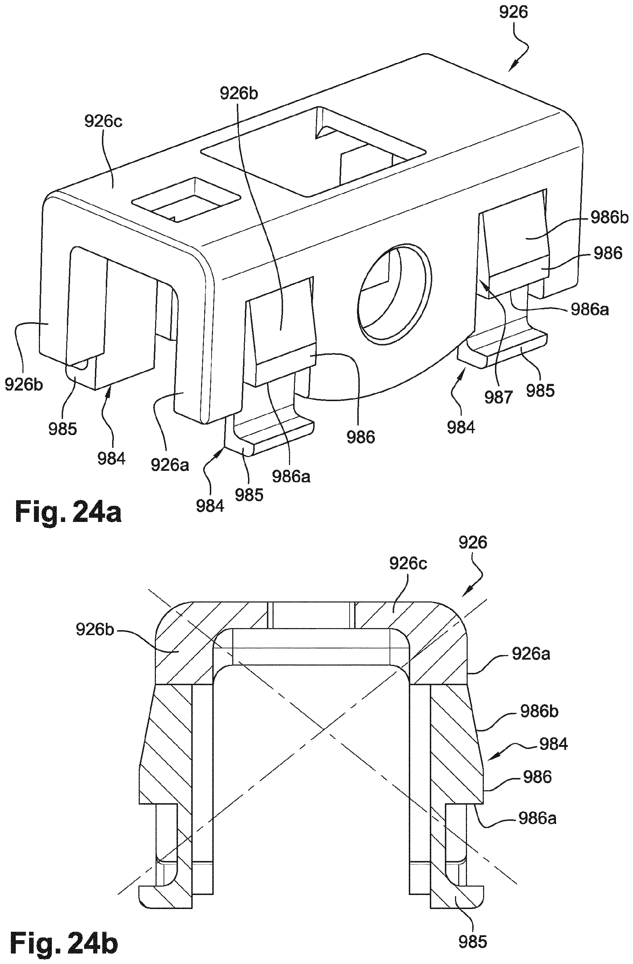

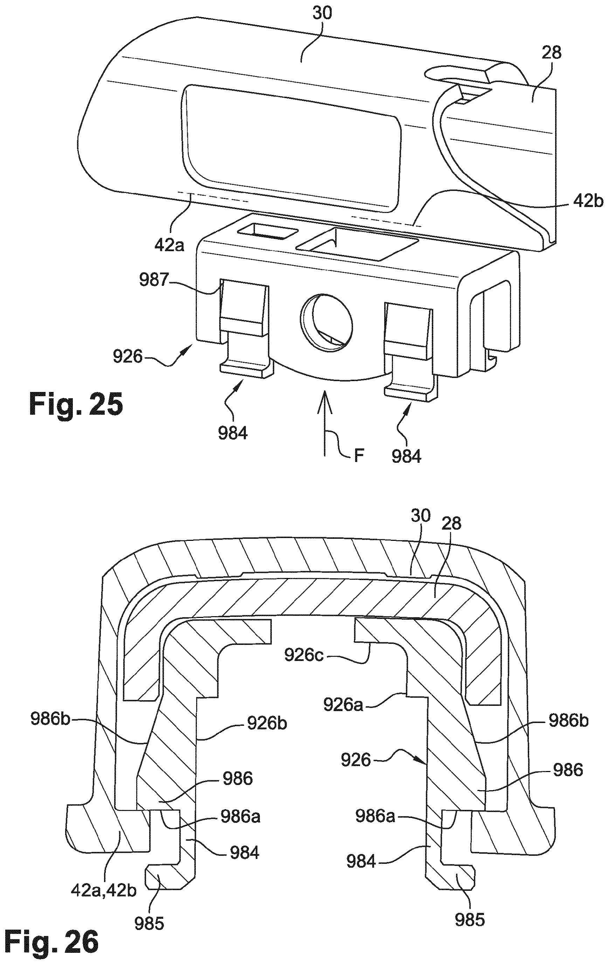

Les figures 24a et 26 illustrent un sixième aspect de l'invention, dans lequel l'adaptateur 926 comprend un corps de forme allongée configuré pour être solidarisé à la chape 28 à section sensiblement en U d'un bras d'essuie-glace.

Le corps a en section une forme sensiblement en U et comporte deux parois longitudinales latérales 926a, 926b reliées ensemble par une paroi longitudinale supérieure 926c.

L'adaptateur est configuré pour être engagé dans la chape par translation dans une direction sensiblement perpendiculaire à la paroi supérieure 926c, du bas vers le haut (flèche F en figure 25).

Les parois latérales 926a, 926b comprennent des pattes 984 élastiquement déformables en direction transversale et configurées pour coopérer par encliquetage élastique avec des moyens 42a, 42b complémentaires de la chape 28 et/ou d'un organe monté sur la chape, tel que le capot 30.

Les pattes 984 comportent des dents de retenue 985, 986 configurées pour coopérer avec la chape 28 et/ou le capot 30.

Dans l'exemple représenté, chaque paroi latérale 926a, 926b comporte deux pattes 984 élastiquement déformables comportant chacune deux dents de retenue 985, 986, respectivement inférieure et supérieure.

Chacune des pattes 984 a une orientation générale perpendiculaire à la paroi supérieure 926c. Chaque patte 984 est délimitée par deux fentes 987 parallèles et traversantes formées sur la paroi latérale 926a, 926b correspondante et débouchant sur le bord inférieur libre de cette paroi latérale. Les pattes d'une même paroi latérale sont à distance l'une de l'autre. Elles s'étendent sensiblement sur 60 à 100% de la hauteur des parois latérales, voire de préférence de 70 à 90% de cette hauteur.

Chaque patte 984 comprend une dent inférieure 985. Cette dent inférieure 985 forme un rebord qui s'étend transversalement vers l'extérieur du corps. Elle est sensiblement perpendiculaire à l'orientation générale de la patte 984 et donc sensiblement parallèle à la paroi supérieure 926c.

Chaque patte 984 comprend une dent supérieure 986, qui forme un plot qui s'étend transversalement vers l'extérieur du corps. Cette dent définit à son extrémité inférieure une surface 986a de retenue, sensiblement parallèle à la dent inférieure 985, et à son extrémité supérieure une rampe externe 986b destinée à coopérer par glissement avec les moyens 42a, 42b complémentaires précités de la chape 28 ou du capot 30.

Les dents 985, 986 de chaque patte 984 sont à distance l'une de l'autre et définissent entre elles un espace de réception des moyens 42a, 42b. Cet espace est plus exactement délimité par la surface 986a de la dent supérieure et le rebord ou la dent inférieure 985.

L'adaptateur 926 est formé d'une seule pièce.

Dans l'exemple représenté, les pattes 984 sont configurées pour coopérer par encliquetage élastique avec le capot 30, et en particulier avec les rails ou rebords 42a, 42b de guidage en coulissement du capot 30.

Lorsque le capot 30 est en position reculée sur la chape 28, l'adaptateur 926 peut être monté dans la chape en le positionnant sous la chape, comme représenté en figure 25. L'adaptateur est alors déplacé dans une direction sensiblement perpendiculaire à la paroi supérieure, dans le sens de la flèche F, jusqu'à ce que les rebords 42a, 42b du capot 30 prennent appui sur les rampes 986b des dents supérieures 986 des pattes 984. La translation de l'adaptateur est poursuivie de façon à ce que les rebords 42a, 42b glissent sur les rampes, ce qui provoque la déformation des pattes 984 par flexion transversale vers l'intérieur du corps, les extrémités ou dents inférieures 985 des pattes 984 portées par une paroi latérale se rapprochant des extrémités ou dents inférieures 985 des pattes 984 portées par l'autre paroi latérale. La translation de l'adaptateur est poursuivie jusqu'à ce que les rebords 42a, 42b s'engagent entre les dents 985, 986 des pattes, par retour élastique des pattes dans leur position de repos. Dans cette position, les surfaces 986a des dents supérieures 984 peuvent coopérer par appui avec les rebords 42a, 42b pour empêcher un déplacement vers le bas de l'adaptateur vis-à-vis de la chape, c'est-à-dire un déplacement à l'opposé du sens de la flèche F. Les dents inférieures 985 des pattes peuvent coopérer avec ces rebords pour limiter les déplacements vers le haut de l'adaptateur vis-à-vis de la chape. Pour sortir l'adaptateur de la chape, il est envisageable de déformer les pattes 984 en les faisant fléchir vers l'intérieur, manuellement ou au moyen d'un outil, par exemple en prenant appui sur les dents inférieures 985 des pattes. En variante, il est envisageable de déplacer le capot 30 vers sa position avancée de façon à ce que ses rebords 42a, 42b ne gênent pas la sortie de l'adaptateur de la chape.

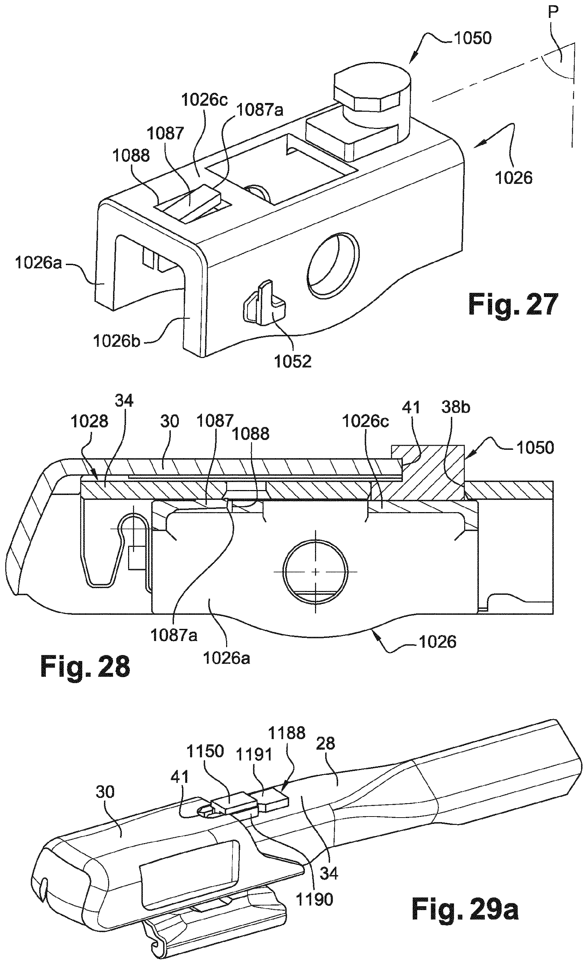

Les figures 27 et 28 illustrent un septième aspect de l'invention, dans lequel l'adaptateur 1026 comprend un corps de forme allongée configuré pour être solidarisé à la chape 28 à section sensiblement en U d'un bras d'essuie-glace.

Le corps a en section une forme sensiblement en U et comporte deux parois latérales 1026a, 1026b reliées ensemble par une paroi supérieure 1026c. La paroi supérieure 1026c comporte un premier élément en saillie 1050 configuré pour s'étendre au moins en partie dans un orifice 38b traversant de la chape 28. Ce premier élément en saillie 1050 est ici similaire à celui de la variante des figures 8a à 12 mais pourrait naturellement être différent.

Au moins l'une des parois du corps de l'adaptateur comprend une languette 1087 élastiquement déformable configurée pour prendre appui sur une face interne de la chape 28, afin de supprimer un jeu entre l'adaptateur et cette face interne.

Dans l'exemple représenté, l'adaptateur 1026 comprend une languette 1087 de ce type, qui est ici située sur la paroi supérieure 1026c de son corps.

La languette 1087 est située au voisinage d'une extrémité longitudinale du corps, ici avant, et le premier élément en saillie 1050 est situé à une extrémité longitudinale opposée, donc arrière, du corps.

La languette 1087 est flexible et elle présente une extrémité venue de matière avec la paroi associée du corps d'adaptateur et une extrémité libre 1087a configurée pour être déplaçable entre une position non contrainte où son extrémité libre est en saillie du plan de la paroi supérieure, à l'extérieur du corps (figure 27), et une position rabattue et contrainte dans laquelle elle s'étend sensiblement dans le plan de la paroi supérieure (figure 18). Elle est située dans un évidement ou orifice 1088 du corps. En position rabattue, elle est logée au moins en partie dans cet orifice et, en position en saillie, elle s'étend vers le haut depuis la paroi supérieure 1026c. La languette 1087 est apte à coopérer par appui avec la face interne de la paroi supérieure 34 de la chape 28.

Le corps de l'adaptateur présente un plan de symétrie P parallèle aux parois latérales 1026a, 1026b et passant sensiblement au milieu de la paroi supérieure 1026c. Ce plan de symétrie P traverse sensiblement en son milieu la languette 1087.

Dans l'exemple représenté, le corps de l'adaptateur 1026 comprend sur une face latérale externe de chacune de ses parois latérales 1026a, 1026b, un unique deuxième élément en saillie 1052 configuré pour être engagé dans l'encoche 33b (non visible) de la chape 28.

L'adaptateur est formé d'une seule pièce. Il est retenu dans la chape 28 par le premier élément en saillie 1050, comme expliqué dans ce qui précède en relation avec la variante des figures 8a à 12.

La languette 1087 coopère avec la chape 28 pour limiter les vibrations de l'adaptateur dans la chape, dans la direction selon laquelle la languette s'étend en saillie de la paroi associée. La fixation de l'adaptateur dans la chape par l'intermédiaire notamment du premier élément en saillie coopérant avec l'orifice de la chape, et par le blocage de l'adaptateur par les rails de guidage du capot coulissant tel qu'évoqué précédemment, peut générer des vibrations dues notamment au jeu de montage du premier élément en saillie dans l'orifice. On comprend que la position de la languette sur l'une ou l'autre des parois de l'adaptateur permet de limiter les vibrations selon une direction particulière, sensiblement perpendiculaire à la paroi associée. On pourra prévoir dans une variante non illustrée au moins deux languettes, l'une sur la paroi supérieure et une autre sur au moins une des parois latérales, pour limiter les vibrations de l'adaptateur par rapport à la chape selon plusieurs directions.

Dans chacun de ces cas, il est avantageux d'avoir la ou les languettes disposée(s) à une extrémité longitudinale de l'adaptateur opposée à l'extrémité longitudinale sur laquelle est agencé le premier élément en saillie, pour la meilleure absorption des vibrations générées par le jeu de montage du premier élément en saillie avec la chape.

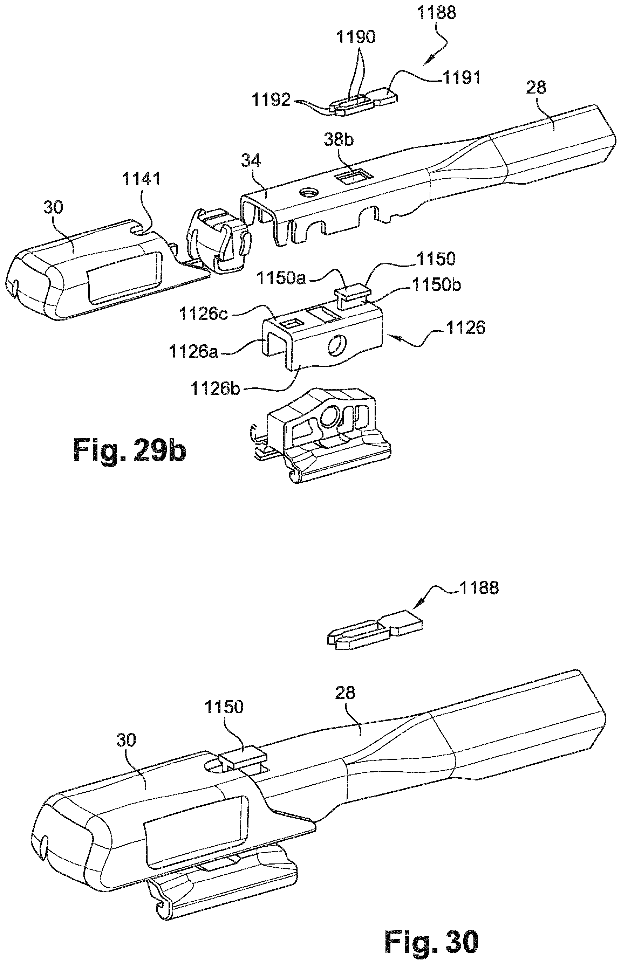

Les figures 29a à 30 illustrent un huitième aspect de l'invention, dans lequel l'adaptateur 1126 comprend un corps de forme allongée configuré pour être solidarisé à la chape 28 à section sensiblement en U d'un bras d'essuie-glace.

Le corps a en section une forme sensiblement en U et comporte deux parois latérales 1126a, 1126b reliées ensemble par une paroi supérieure 1126c.

La paroi supérieure 1126c comporte un premier élément en saillie 1150 configuré pour s'étendre au moins en partie dans l'orifice 38b de la chape 28.

L'adaptateur 1126 comprend en outre au moins une agrafe 1188 configurée pour être rapportée et fixée sur le premier élément en saillie 1150 afin de verrouiller l'adaptateur 1126 vis-à-vis de la chape 28.

Dans l'exemple représenté, le premier élément en saillie 1150 a une forme générale en T et comprend une première paroi 1150a sensiblement parallèle à la paroi supérieure 1126c et une seconde paroi 1150b de liaison de la première paroi 1150a à la paroi supérieure 1126c, et sensiblement perpendiculaire à la paroi supérieure 1126c. La seconde paroi 1150b s'étend sensiblement dans un plan longitudinal médian P de symétrie du corps.

L'agrafe 1188 a une forme générale en U et comprend deux doigts longitudinaux 1190 sensiblement parallèles et reliés par une de leurs extrémités longitudinales à une base 1191 commune.

Les doigts 1190 sont élastiquement déformables par flexion en rapprochement et/ou éloignement l'un de l'autre. Ils comprennent des crochets de retenue 1192 à leurs extrémités opposées à la base 1191. Les crochets 1192 sont orientés en direction transversale, l'un vers l'autre.

Le corps de l'adaptateur 1126 est ici dépourvu d'éléments en saillie sur ses parois latérales 1126a, 1126b. L'adaptateur 1126 est ici formé d'une seule pièce.

Comme indiqué dans ce qui précède, le capot 30 est configuré pour être déplaçable en translation entre une première position dite avancée où il est éloigné de l'orifice 38b et une deuxième position dite reculée où il est rapproché de cet orifice, voire le recouvre en partie ainsi qu'une partie du premier élément en saillie. Le capot coulissant 30 comprend ici une encoche 41 de réception d'une partie avant du premier élément en saillie 1150 ainsi que d'une partie avant de l'agrafe 1188, à savoir les extrémités des doigts 1190 portant les crochets 1192. Avantageusement, dans la position reculée du capot 30, le bord périphérique de l'encoche 41 du capot 30 est apte à coopérer par butée avec les extrémités libres des doigts 1190 venus entourer le premier élément en saillie 1150, de façon à empêcher un écartement des doigts et un démontage de l'agrafe 1188 de l'élément 1150 lorsque le capot est maintenu dans cette position.

L'invention propose ainsi un procédé de montage dans lequel on monte l'adaptateur 1126 dans la chape 28 du bras, de façon à ce que le premier élément en saillie 1150 traverse l'orifice 38b de la chape 28. On monte l'agrafe 1188 autour du premier élément en saillie, notamment en faisant glisser l'agrafe contre la paroi supérieure de la chape. Les doigts sont déformés élastiquement en éloignement l'un de l'autre, les crochets 1192 entrant en contact avec la seconde paroi 1150b lors de la translation de l'agrafe. Les doigts reprennent la forme d'origine lorsque les crochets ont dépassé la deuxième paroi 1150b, ces crochets formant moyen de retenue axiale en butée contre la deuxième paroi. On verrouille ainsi l'adaptateur vis-à-vis de la chape, la première paroi 1150a étant en butée verticale contre les doigts de sorte que le premier élément en saillie ne peut s'échapper par l'orifice. On déplace ensuite le capot le long de la chape, de sa position avancée à sa position reculée et de verrouillage de l'agrafe 1188, le bord périphérique de l'encoche venant contraindre les crochets à se rapprocher l'un de l'autre pour assurer la position de l'agrafe autour du premier élément en saillie.

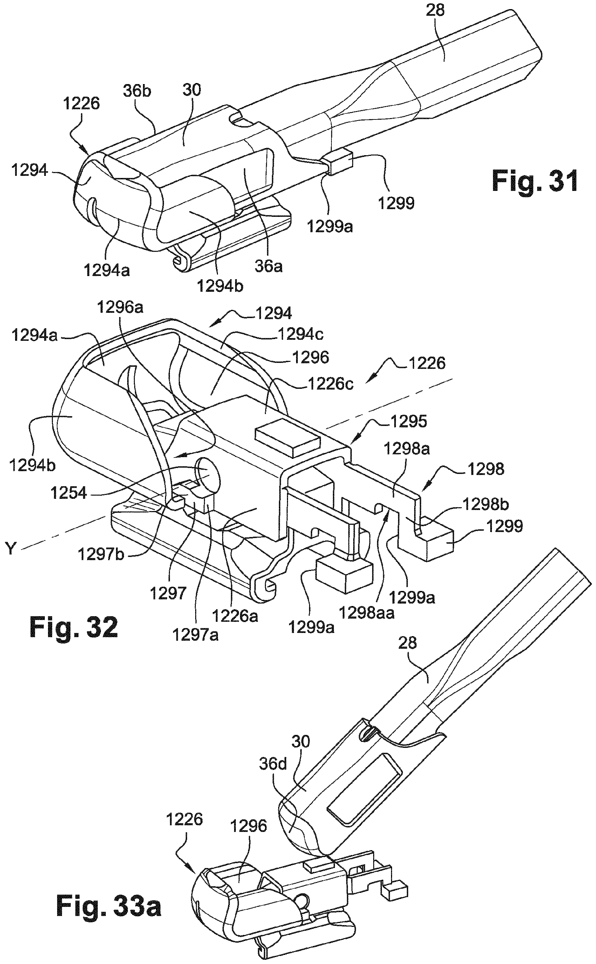

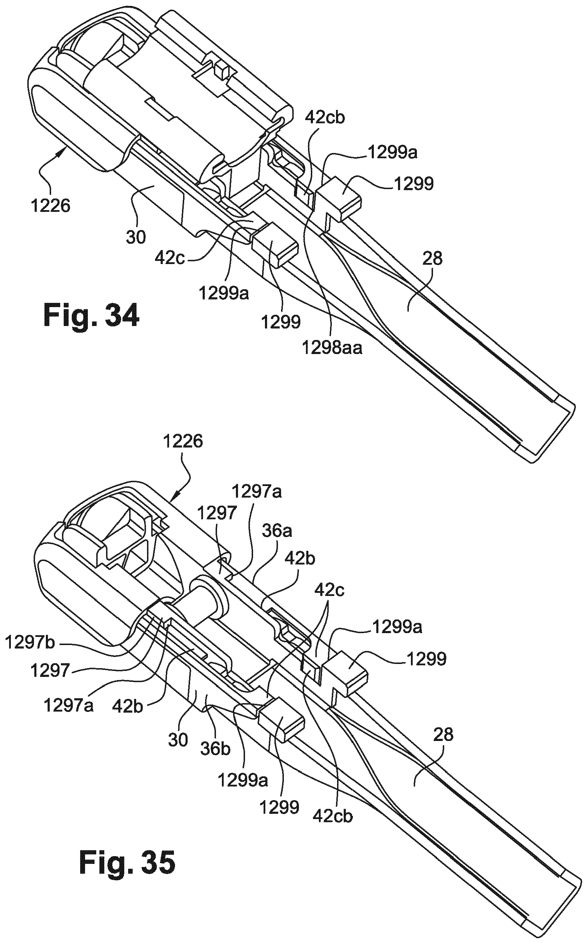

Les figures 31 à 35 illustrent un neuvième aspect de l'invention, dans lequel l'adaptateur 1226 a une forme allongée et est configuré pour être solidarisé au capot 30, ici mobile, disposé à l'extrémité du bras d'essuie-glace.

L'adaptateur comporte un carénage avant 1294 et un corps arrière 1295 qui a en section une forme sensiblement en U et comporte deux parois latérales 1226a, 1226b reliées ensemble par une paroi supérieure 1226c.

Le carénage 1294 comporte une paroi avant 1294a qui est configurée pour s'étendre en avant du corps arrière 1295, de manière à définir avec le corps 1295 un espace longitudinal 1296 de réception d'une partie avant du capot 30.

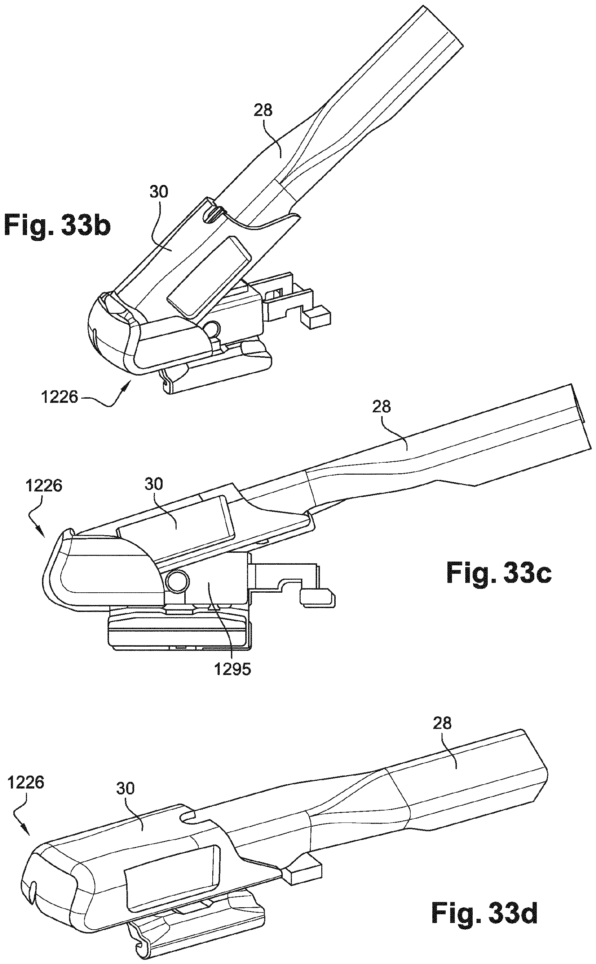

Le carénage 1294 a une forme générale en U dont l'ouverture est orientée vers l'arrière et dont la partie médiane est formée par la paroi avant 1294a. Les parties latérales du U sont formées par des parois latérales 1294b qui s'étendent vers l'arrière depuis la paroi avant 1294a Les parois latérales 1294b sont destinées à s'étendre de chaque côté du capot et à le recouvrir, au moins latéralement, en partie (figure 33d), lorsque le bras, et le capot qu'il porte, et l'adaptateur sont assemblés

Le carénage 1294 comprend une ouverture supérieure 1294c de montage du capot 30 dans l'espace.

La largeur du carénage, c'est-à-dire la dimension entre les parois latérales, est supérieure à la largeur du corps arrière, de sorte qu'un espace transversal 1296a est aménagé de chaque côté du corps arrière entre celui-ci et le carénage.

Les parois latérales 1226a du corps 1295 comprennent respectivement deux orifices 1254 alignés, qui définissent l'axe d'articulation Y précité. Les parois latérales comprennent en outre chacun un ergot en saillie 1297 de la paroi latérale correspondante. Chaque ergot 1297 est situé sous l'orifice 1254 de la paroi latérale 1226a, 1226b correspondante, à la jonction entre cette paroi et un voile transversal de jonction de la paroi latérale 1226a, 1226b à l'extrémité inférieure de la paroi latérale 1294b du carénage 1294 la plus proche. On comprend que le voile transversal et l'ergot définissent la dimension de l'espace transversal laissé latéralement entre le corps arrière et le carénage. Chaque ergot 1297 a une forme générale parallélépipédique et comprend une face 1297a orientée vers l'arrière et une face 1297b orientée latéralement vers l'extérieur. La face 1297a est une face d'appui d'un moyen complémentaire du capot, qui est ici l'extrémité avant du rebord intermédiaire 42b du capot. Les rebords intermédiaires 42b du capot sont ainsi destinés à prendre appui sur les faces arrière 1297a des ergots 1297 de l'adaptateur, en position montée du capot dans l'adaptateur (figures 33d à 35). La face 1297b est une face d'appui d'une paroi latérale 36a, 36b correspondante du capot 30. Le capot est ainsi destiné à enserrer latéralement l'adaptateur 1226 par appui de ses parois latérales 36a, 36b sur les faces 1297b des ergots 1297.

Les parois latérales 1226a, 1226b du corps comportent également des moyens élastiquement déformables d'encliquetage élastique configurés pour coopérer avec des moyens complémentaires du capot 30. Chaque paroi latérale 1226a du corps comprend une patte longitudinale 1298 élastiquement déformable et formant lesdits moyens d'encliquetage élastique. Chaque patte 1298 a une forme générale en L et comprend deux portions sensiblement rectilignes, dont une première portion 1298a s'étend vers l'arrière dans le prolongement du corps arrière, ici depuis les parois latérales, et est reliée à une seconde portion 1298b qui s'étend vers le bas.

Les premières portions 1298a comportent chacune une encoche 1298aa réalisée par découpe de la face inférieure de la première portion 1298a au voisinage direct de la seconde portion 1298b. Cette encoche forme un moyen de réception d'un moyen complémentaire porté par le capot, à savoir les rebords arrière 42c et plus particulièrement les secondes portions 42cb formant crochet de ces rebords arrière. Les premières portions 1298a des pattes sont reliées aux parois latérales par une zone de moindre section facilitant l'articulation des premières portions autour d'un axe formé par la ligne de jonction des parois latérales et de la patte. Les pattes sont ainsi articulées pour débattre transversalement.

Les secondes portions 1298b des pattes comprennent respectivement deux doigts transversaux 1299 s'étendant dans des directions opposées et configurés pour être accessibles lorsque le bras et l'adaptateur sont rendus solidaires. Les doigts 1299 s'étendent dans un même plan longitudinal. Chaque doigt 1299 a une forme générale parallélépipédique et comprend une face avant 1299a contre laquelle peut venir en appui le rebord arrière 42c du capot. Les doigts participent ainsi au maintien en position longitudinale du capot ainsi destiné à être enserré entre les faces arrière 1297a des ergots 1297 et les faces avant 1299a des doigts 1299 de l'adaptateur, en plus de la coopération des rebords arrière avec les encoches des pattes. Ces doigts forment des moyens d'actionnement accessibles par l'utilisateur pour forcer les pattes à se déformer élastiquement et permettre le désengagement des moyens complémentaires du capot, et donc permettre le désassemblage de l'adaptateur par rapport au bras. (figures 33d à 35).

L'adaptateur 1226 est formé d'une seule pièce.
Les figures 33a à 33d représentent des étapes de montage du capot ainsi que du bras portant le capot, dans l'adaptateur. Le bras et le capot sont disposés comme indiqué en figure 33a, le capot étant positionné au-dessus de l'adaptateur et étant prêt à être inséré dans l'espace 1296 par passage à travers l'ouverture 1294c du carénage 1294. Le capot 30 est ensuite déplacé en translation longitudinale jusqu'à insertion dans l'espace 1296 et contact de la paroi d'extrémité avant du capot avec la paroi avant 1294a du carénage (figure 33b). Le capot est alors déplacé avec le bras en le faisant pivoter autour d'un axe transversal situé sensiblement au niveau de la paroi avant du carénage. Ce pivotement peut être facilité par le glissement de la paroi avant 36d du capot 30 sur la face externe de la paroi avant 1294a du carénage 1294. Le pivotement est poursuivi avec les parois latérales du capot qui s'engagent dans les espaces transversaux 1296a, disposés de part et d'autre du corps arrière 1295, ce qui participe au positionnement transversal correct du bras et du capot pour que les moyens complémentaires du capot coopèrent avec les moyens d'encliquetage élastiques portés par l'adaptateur. Le pivotement force les pattes 1298 en déformation élastique transversale en éloignement l'une de l'autre pour laisser passage aux crochets 42cb des rebords arrière 42c du capot 30. Lorsque les crochets prennent place en regard des encoches 1298aa, les pattes reprennent leur position d'origine dans l'axe des parois latérales de l'adaptateur et les crochets sont en regard, éventuellement en appui des faces avant 1299a des doigts 1299. Le capot est de la sorte engagé entre les faces 1297a, 1299a précitées et est maintenu contraint en direction longitudinale, notamment entre ces faces (figures 33c et 33d).

## Revendications

1. Adaptateur (826) pour un essuie-glace, en particulier de véhicule automobile, comprenant un corps de forme allongée et configuré pour être monté dans une chape (28) à section sensiblement en U d'un bras (14) d'essuie-glace, ledit corps ayant en section une forme sensiblement en U et comportant deux parois longitudinales latérales (826a, 826b) reliées ensemble par une paroi longitudinale supérieure (826c), ladite paroi supérieure comportant un moyen de fixation configuré pour être logé dans au moins un orifice (38a, 38b) traversant de ladite chape, ledit moyen de fixation comportant deux éléments distincts (850a, 850b, 850c) en saillie de la paroi supérieure porteurs respectivement d'une surface de contact (850b1, 850c1) avec un bord d'un même orifice de la chape, au moins un desdits deux éléments distincts étant flexible, **caractérisé en ce que** le ou les éléments en saillie flexibles sont articulés autour d'un axe formé par la ligne de jonction de la paroi supérieure (826c) avec ledit élément en saillie correspondant, le ou les éléments en saillie ayant une forme générale en L et comprenant une portion sensiblement rectiligne s'étendant vers le haut depuis ladite paroi supérieure (826c) et reliée à son extrémité supérieure à un rebord orienté (851) vers une extrémité longitudinale du corps.

2. Adaptateur (826) selon la revendication 1, dans lequel les deux éléments en saillie dudit moyen de fixation comportent un premier élément en saillie (850c) flexible, articulé autour d'un axe formé par la ligne de jonction de la paroi supérieure (826c) avec ledit premier élément en saillie (850c), et un deuxième élément en saillie (850b) prenant la forme d'un plot fixe.

3. Adaptateur (826) selon la revendication 2, dans lequel ledit deuxième élément en saillie (850b1) a une forme générale parallélépipédique.

4. Adaptateur (826) selon la revendication 1, dans lequel les deux éléments en saillie dudit moyen de fixation comportent deux éléments en saillie flexible, articulés respectivement autour d'un axe formé par la ligne de jonction de la paroi supérieure (826c) avec ledit élément en saillie correspondant.

5. Adaptateur (826) selon la revendication précédente, dans lequel les surfaces de contact portées respectivement par les éléments en saillie sont orientées à l'opposé l'une de l'autre.

6. Adaptateur (826) selon l'une des revendications précédentes, dans lequel ledit rebord (851) est configuré pour coopérer par appui avec ladite chape (28) pour retenir l'adaptateur vis-à-vis de la chape.

7. Adaptateur (826) selon l'une des revendications précédentes, dans lequel la paroi supérieure (826c) porte un troisième élément en saillie (850a).

8. Adaptateur (826) selon la revendication 7, dans lequel ledit troisième élément en saillie (850a) a une forme générale cylindrique.

9. Adaptateur (826) selon la revendication 7 ou 8, dans lequel ledit troisième élément en saillie (850a) est configuré pour être engagé dans un autre orifice (38a) de ladite chape (28).

10. Adaptateur (826) selon l'une des revendications 7 à 9, dans lequel les trois éléments en saillie (850a, 850b, 850c) de la paroi supérieure (826c) sont alignés.

11. Adaptateur (826) selon l'une des revendications précédentes, dans lequel ledit corps est formé d'une seule pièce.

12. Ensemble comportant un bras d'essuie-glace et un adaptateur (826) selon l'une des revendications précédentes.

13. Ensemble selon la revendication 12, dans lequel ledit bras (14) a une forme générale allongée et comporte une chape (28) à section sensiblement en U et comportant deux parois longitudinales latérales (32a,32b) reliées ensemble par une paroi longitudinale supérieure (34), ledit bras comportant également un capot (30) monté coulissant sur la chape en translation longitudinale.

14. Ensemble comportant un balai d'essuie-glace et un adaptateur (826) selon l'une des revendications 1 à 11, ledit adaptateur étant de préférence monté sur ledit balai par l'intermédiaire d'un connecteur (24).

## Patentansprüche

1. Adapter (826) für einen Scheibenwischer, insbesondere für ein Kraftfahrzeug, der einen Körper mit länglicher Form umfasst, der ausgelegt ist, um mit einer Gabel (28) mit im Wesentlichen U-Querschnitt eines Arms (14) eines Scheibenwischers fest verbunden zu sein, wobei der Körper im Querschnitt im Wesentlichen U-förmig ist und zwei seitliche Längswände (826a, 826b) umfasst, die miteinander durch eine obere Längswand (826c) verbunden sind, wobei die obere Wand ein Befestigungsmittel umfasst, das ausgebildet ist, um in mindestens einer Öffnung (38a, 38b) aufgenommen zu werden, die durch die Gabel hindurchgeht, wobei das Befestigungsmittel zwei unterschiedliche Elemente (850a, 850b, 850c) umfasst, die von der oberen Wand bzw. einer Kontaktfläche (850b1, 850c1) mit einer Wand derselben Öffnung der Gabel hervorstehen, wobei mindestens eines der zwei unterschiedlichen Elemente flexibel ist, **dadurch gekennzeichnet, dass** das oder die flexiblen hervorstehenden Elemente um eine Achse herum angeordnet sind, die durch die Verbindungslinie der oberen Wand (826c) mit dem entsprechenden hervorstehenden Element gebildet wird, wobei das oder die hervorstehenden Elemente im Allgemeinen L-förmig sind und einen im Wesentlichen geradlinigen Abschnitt umfassen, der sich von der oberen Wand (826c) nach oben erstreckt und an seinem oberen Ende mit einer in Richtung eines Längsendes des Körpers ausgerichteten Stoßkante (851) verbunden ist.

2. Adapter (826) nach Anspruch 1, bei dem die zwei hervorstehenden Elemente des Befestigungsmittels ein erstes flexibles hervorstehendes Element (850c) umfassen, das um eine Achse herum angeordnet ist, die durch die Verbindungslinie der oberen Wand (826c) mit dem ersten hervorstehenden Element (850c) gebildet wird, und ein zweites hervorstehendes Element (850b) die Form eines festen Zapfens einnimmt.

3. Adapter (826) nach Anspruch 2, bei dem das zweite hervorstehende Element (850b) im Allgemeinen quaderförmig ist.

4. Adapter (826) nach Anspruch 1, bei dem die zwei hervorstehenden Elemente des Befestigungsmittels zwei flexible hervorstehende Elemente umfassen, die jeweils um eine Achse herum angeordnet sind, die durch die Verbindungslinie der oberen Wand (826c) mit dem entsprechenden hervorstehenden Element gebildet wird.

5. Adapter (826) nach dem vorhergehenden Anspruch, bei dem die jeweils von den hervorstehenden Elementen getragenen Kontaktflächen einander gegenüberliegend ausgerichtet sind.

6. Adapter (826) nach einem der vorhergehenden Ansprüche, bei dem die Stoßkante (851) ausgebildet ist zum Zusammenwirken durch Druck mit der Gabel (28), um den Adapter gegenüber der Gabel zu halten.

7. Adapter (826) nach einem der vorhergehenden Ansprüche, bei dem die obere Wand (826c) ein drittes hervorstehendes Element (850a) trägt.

8. Adapter (826) nach Anspruch 7, bei dem das dritte hervorstehende Element (850a) im Allgemeinen zylindrisch ist.

9. Adapter (826) nach Anspruch 7 oder 8, bei dem das dritte hervorstehende Element (850a) ausgebildet ist zum Eingreifen in eine andere Öffnung (38a) der Gabel (28) .

10. Adapter (826) nach einem der Ansprüche 7 bis 9, bei dem die drei hervorstehenden Elemente (850a, 850b, 850c) der oberen Wand (826c) ausgerichtet sind.

11. Adapter (826) nach einem der vorhergehenden Ansprüche, der aus einem einzigen Teil gebildet ist.

12. Baugruppe, die einen Scheibenwischerarm und einen Adapter (826) nach einem der vorhergehenden Ansprüche umfasst.

13. Baugruppe nach Anspruch 12, wobei der Arm (14) eine allgemeine längliche Form hat und eine Gabel (28) mit im Wesentlichen U-förmigem Querschnitt umfasst, und zwei seitliche Längswände (32a, 32b) umfasst, die miteinander durch eine obere Längswand (34) verbunden sind, wobei der Arm auch eine Abdeckung (30) umfasst, die in Längsrichtung verschiebbar auf der Gabel angebracht ist.

14. Baugruppe, die ein Scheibenwischerblatt und einen Adapter (826) nach einem der Ansprüche 1 bis 11 umfasst, wobei der Adapter vorzugsweise über einen Verbinder (24) an dem Blatt angebracht ist.

## Claims

1. Adapter (826) for a windscreen wiper, in particular a motor vehicle windscreen wiper, comprising a body of elongate shape configured to be mounted in a yoke (28) of substantially U-shaped cross section of a wiper arm (14), said body having a substantially U-shaped cross section and having two longitudinal side walls (826a, 826b) connected together by an upper longitudinal wall (826c), said upper wall having a fastening means configured to be housed in at least one through-orifice (38a, 38b) of said yoke, said fastening means having two separate elements (850a, 850b, 850c) that protrude from the upper wall and respectively bear a contact surface (850b1, 850c1) for contact with an edge of one and the same orifice in the yoke, at least one of said two separate elements being flexible, **characterized in that** the flexible protruding element(s) are articulated about an axis formed by the junction line of the upper wall (826c) with said corresponding protruding element, the protruding element(s) being in the overall shape of an L and comprising a substantially rectilinear portion that extends upwards from said upper wall (826c) and is connected at its upper end to a lip (851) oriented towards a longitudinal end of the body

2. Adapter (826) according to Claim 1, wherein the two protruding elements of said fastening means have a first flexible protruding element (850c), articulated about an axis formed by the junction line between the upper wall (826c) and said first protruding element (850c), and a second protruding element (850b) in the form of a fixed protuberance.

3. Adapter (826) according to Claim 2, wherein said second protruding element (850b) is in the overall shape of a parallelepiped.

4. Adapter (826) according to Claim 1, wherein the two protruding elements of said fastening means have two flexible protruding elements, respectively articulated about an axis formed by the junction line between the upper wall (826c) and said corresponding protruding element.

5. Adapter (826) according to the preceding claim, wherein the contact surfaces borne respectively by the protruding elements are oriented away from one another.

6. Adapter (826) according to one of the preceding claims, wherein said lip (851) is configured to cooperate with said yoke (28) by bearing so as to retain the adapter with respect to the yoke.

7. Adapter (826) according to one of the preceding claims, wherein the upper wall (826c) bears a third protruding element (850a).

8. Adapter (826) according to Claim 7, wherein said third protruding element (850a) is in the overall shape of a cylinder.

9. Adapter (826) according to Claim 7 or 8, wherein said third protruding element (850a) is configured to be inserted into another orifice (38a) in said yoke (28).

10. Adapter (826) according to one of Claims 7 to 9, wherein the three protruding elements (850a, 850b, 850c) of the upper wall (826c) are aligned.

11. Adapter (826) according to one of the preceding claims, wherein said body is formed in one piece.

12. Assembly having a wiper arm and an adapter (826) according to one of the preceding claims.

13. Assembly according to Claim 12, wherein said arm (14) has an elongate overall shape and has a yoke (28) with a substantially U-shaped cross section and having two longitudinal side walls (32a, 32b) connected together by an upper longitudinal wall (34), said arm also having a cover (30) mounted so as to slide in longitudinal translation on the yoke.

14. Assembly having a wiper blade and an adapter (826) according to one of Claims 1 to 11, said adapter preferably being mounted on said blade by way of a connector (24).
